# EUROPEAN PATENT APPLICATION

(11) **EP 4 538 619 A1**
(43) Date of publication of application: **16.04.2025**
(21) Application number: 23941693.6
(22) Date of filing: 13.06.2023
(51) Int. Cl.: F25D 23/06, F25D 23/02, F16L 59/065

(54) **VACUUM ADIABATIC BODY**

(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR); LEE, Sungsub, Seoul 08592 (KR); BAE, Jaehyun, Seoul 08592 (KR)
(74) Representative: Ter Meer Steinmeister & Partner
(86) International application number: PCT/KR2023/008143
(87) International publication number: WO 2024/257910

(57) **Abstract**

The vacuum adiabatic body of the present invention may include: a first plate having a first temperature; a second plate having a second temperature that differs from the first temperature; and a vacuum space provided between the first and second plates.

## Description

### TECHNICAL FIELD

The present invention relates to a vacuum adiabatic body.

### BACKGROUND ART

Adiabatic performance may be improved by forming an adiabatic wall using vacuum. A device of which at least a portion of an internal space is provided in a vacuum state to achieve an adiabatic effect may be called a vacuum adiabatic body.

The applicant has developed a technology to obtain a vacuum adiabatic body that may be used in various devices and home appliances, and has disclosed a vacuum adiabatic body and a refrigerator in Korean Patent Application No. 10-2015-0109722. The vacuum adiabatic body of the cited document discloses a technology of installing a peripheral insulation material on a peripheral portion thereof.

The cited document has a problem of low insulation efficiency due to a small size of the peripheral portion, difficulty in coupling, increasing number of components, and low insulation efficiency due to a short heat pass between first and second plates.

### DISCLOSURE OF THE INVENTION

### TECHNICAL PROBLEM

The present invention proposes a vacuum adiabatic body that improves an insulation effect and is manufactured conveniently.

In addition to the examples proposed above, the present invention proposes specific solutions to problems and solutions for solving the problems in [Technical Solution] and [Best Mode].

### TECHNICAL SOLUTION

The vacuum adiabatic body of the present invention may include: a first plate having a first temperature; a second plate having a second temperature that differs from the first temperature; and a vacuum space provided between the first and second plates. The vacuum adiabatic body of the present invention may include a sealing part that seals the first plate and the second plate to provide the vacuum space. The vacuum adiabatic body of the present invention may include a sealing part that seals the first plate, the second plate, and the side plate to provide the vacuum space.

Optionally, an inner panel may be included to protect the vacuum space from the outside of the vacuum space. The inner panel may be coupled to the side plate. The first coupling part of the side plate and the second coupling part of the inner panel may be a boss and a boss guide. The boss and the boss guide may be coupled to each other through a screw. Each of the first coupling part of the side plate and the second coupling part of the inner panel may be a hook protrusion. The inner panel and the first plate may be coupled to each other. A third coupling part of the inner panel and a fourth coupling part of the first plate may be a groove and a rib. The third coupling part of the inner panel and the fourth coupling part of the first plate may be a boss and a boss guide. The boss and the boss guide may be coupled to each other through a screw. The coupling may be provided as first coupling of the first coupling part of the side plate and the second coupling part of the inner panel, and second coupling of the third coupling part of the inner panel and the fourth coupling part of the first plate. The first and second couplings may be hook protrusions in the same direction. The inner panel may have a sidewall extending in the thickness direction of the vacuum space from the side edge. The sidewall may extend along the side plate. The inner panel may have at least one of an upper wall or a lower wall, which extends in the thickness direction of the vacuum space from each of the upper and lower edges. At least one of the upper wall or the lower wall may provide a space configured to accommodate an insulation material. The side plate may have an extension part extending in the thickness direction of the vacuum space along the second plate.

Optionally, the inner panel may have a wall extending in the height direction of the vacuum space. The wall may have at least one of an upper wall, a lower wall, or a sidewall, and at least one of the upper wall, the lower wall, or the sidewall may provide a space defined to accommodation the insulation material. The wall may be integrally injected with the inner panel. At least a portion of said wall may have a portion extending along the side plate. The inner space of the inner panel may be empty.

Optionally, the side plate and the second plate may have respective extension parts facing each other and extending backward. Each of the extension parts may be sealed with respect to each other. The ends of each of the extension parts may be sealed to each other. At least a portion of a gap between the extension parts may be provided as the vacuum space. At least some of each of the extension parts may be spaced apart from each other.

Optionally, the side plate may have at least three bent parts that change the extension direction. A conductive resistance sheet connected between the first plate and the second plate may be included, and the conductive resistance sheet may be provided in a straight line. The side plate may have the highest uppermost part. It may have a first extension extending by being bent from the uppermost part. It may have a second extension part that extends by being bent from the first extension part. It may have a third extension part that extends by being bent from the second extension part. It may have a fourth extension part that extends by being bent from the third extension part. A first curvature part having a center of curvature at a right side between the uppermost top surface and the first extension part. At least one of a second curvature part having a center of curvature at a left side between the first and second extension parts, a third curvature part having a center of curvature at a right side between the second and third extension parts, and a fourth curvature part having a center of curvature at a left side between the third and fourth extension parts may be included. A radius of curvature of the third curvature part may be greater than or equal to that of curvature of the first curvature part. A radius of curvature of the second curvature part may be less than that of the first curvature part. A radius of curvature of the fourth curvature part may be greater than that of the third curvature part. A right angle may be defined between the first and second extension parts without any curvature. In the extension parts, the third extension part may be the shortest. The fourth extension part may extend along an inner surface of the second plate. At least a portion of the inner space of the fourth extension part may be the vacuum space. The side plate may have at least two walls extending in the thickness direction of the vacuum space. The wall may not be welded.

Optionally, the second plate may include a first portion of the second plate adjacent to the vacuum space in the thickness direction of the vacuum space, and a second portion of the second plate far from the first portion of the second plate in the thickness direction of the vacuum space. The side plate may be sealed to the second portion of the second plate. The side plate may not be sealed to the second portion of the second plate. Beyond the first portion of the second plate, the second portion of the second plate may extend further laterally. The second portion of the second plate may be bent via the first portion. The first portion of the second plate and the second portion of the second plate may be attached.

Optionally, the vacuum space may extend laterally beyond the support. A conductive resistance sheet connecting the side plate to the first plate may be included. The support may include an area that supports the side plate and the conductive resistance sheet at the same point. The support may include an area that does not support both the side plate and the conductive resistance sheet. The support may not be in contact with an end sidewall of the vacuum space. The support may not support the conductive resistance sheet.

Optionally, a cover providing the peripheral insulation material may be included. The side plate may be supported on the cover. The side plate may be in contact with the cover. The peripheral insulation material may be manufactured from a foaming liquid. The cover may include at least one of an upper cover or a lower cover. The ends of the side plate may be supported on the cover. The bent end of the side plate may be supported on the cover. A support block may be included between a portion of the second plate and the side plate. The support block may support the side plate. The support block may be attached to a portion of the second plate.

Optionally, the second plate may include a second portion of the second plate that is away from the vacuum space. The side plate may include a first portion extending in the thickness direction of the vacuum space, a second portion extending in the extension direction of the vacuum space, and a third portion extending in a direction different from the extension direction of the second portion. A fixed structure to which the third portion is coupled and supported may be provided. The third portion may intersect at least one of the thickness direction or the extension direction of the vacuum space. The third portion may be provided on two sides facing each other. The fixed structure may include at least one of a lower cover, an upper cover, or an inner panel. At least one of the lower cover, the upper cover, or the inner panel may be configured to accommodate the foaming liquid. The fixed structure may be provided with a slit in at least one of the lower cover, the upper cover, or the inner panel, which is in contact with the third portion. The second plate may have a first portion of the second plate that is closer to the vacuum space than the second portion of the second plate.

Optionally, a side plate connecting the first plate to the second plate may be further provided. A vacuum adiabatic body module including a sealing part configured to seal the first plate and the second plate may be provided first to provide the vacuum space. First, the vacuum adiabatic body module including the sealing part configured to seal the first plate, the second plate, and the side plate may be provided first to provide the vacuum space. A second portion of the second plate on which the vacuum adiabatic body module is placed may be provided. The fixed structure may be provided to be placed outside of the vacuum space and to prevent the vacuum adiabatic body module from moving with respect to the second portion. The fixed structure may include a support block. The support block may be provided on each of both sidewalls of the vacuum adiabatic body module. The fixed structure may include a cover. The cover may provide a space in which the peripheral insulation material is accommodated. The peripheral insulation material may be a foam member.

### ADVANTAGEOUS EFFECTS

According to the present invention, the vacuum adiabatic body having the high adiabatic efficiency may be proposed.

According to the present invention, the vacuum adiabatic body may be conveniently manufactured.

The effects of the present invention are disclosed in more detail in [Specific details for carrying out the invention].

### BRIEF DESCRIPTION OF THE DRAWINGS

Fig. 1 is a perspective view of a refrigerator according to an embodiment.
Fig. 2 is a view schematically illustrating a vacuum adiabatic body used in a main body and a door of the refrigerator.
Fig. 3 is a view illustrating an example of a support that maintains a vacuum space.
Fig. 4 is a view for explaining an example of the vacuum with respect to a heat transfer resistor.
Fig. 5 is a graph illustrating results obtained by observing a process of exhausting the inside of the vacuum adiabatic body with a time and pressure when the support is used.
Fig. 6 is a graph illustrating results obtained by comparing a vacuum pressure to gas conductivity.
Fig. 7 is a view for explaining a method for manufacturing a vacuum adiabatic body.
FIG. 8 is a perspective of a vacuum adiabatic body in a state in which an inner panel and accessories thereof are removed.
FIG. 9 is an exploded perspective view of the vacuum adiabatic body.
FIG. 10 is a horizontal cross-sectional view of the vacuum adiabatic body.
FIGS. 11 to 14 are views illustrating coupling of the inner panel according to an embodiment.
FIG. 15 is a cross-sectional view of an entire vacuum adiabatic body.
FIG. 16 is an exploded perspective view of the vacuum adiabatic body.
FIG. 17 is an exploded view of a portion A of FIG. 15.
FIG. 18 is a partial cross-sectional view of the vacuum adiabatic body.
FIG. 19 is a partial cross-sectional view of a vacuum adiabatic body according to another embodiment.
FIG. 20 is a view for explaining a process of manufacturing a vacuum adiabatic body.
FIG. 21 is a reference view for explaining a design factor of members of the vacuum adiabatic body.
FIG. 22 is a rear view of the vacuum adiabatic body according to an embodiment.
FIG. 23 is a cross-sectional view taken along line 1-1' of an upper portion of the vacuum adiabatic body of FIG. 22.
FIG. 24 is a cross-sectional view taken along line 2-2' of an upper portion of the vacuum adiabatic body of FIG. 22.
FIG. 25 is a cross-sectional view taken along line 3-3' of an upper portion of the vacuum adiabatic body of FIG. 22.
FIG. 26 is a partial cross-sectional view of the vacuum adiabatic body according to an embodiment.
FIG. 27 is a cross-sectional view of an upper portion of the vacuum adiabatic body.
FIG. 28 is a cross-sectional view of a lower portion of the vacuum adiabatic body.

### MODE FOR CARRYING OUT THE INVENTION

Hereinafter, specific embodiments will be described in detail with reference to the accompanying drawings. The invention may, however, be embodied in many different forms and should not be construed as being limited to the embodiments set forth herein, and a person of ordinary skill in the art, who understands the spirit of the present invention, may readily implement other embodiments included within the scope of the same concept by adding, changing, deleting, and adding components; rather, it will be understood that they are also included within the scope of the present invention.

The present invention may have many embodiments in which the idea is implemented, and in each embodiment, any portion may be replaced with a corresponding portion or a portion having a related action according to another embodiment. The present invention may be any one of the examples presented below or a combination of two or more examples.

The present disclosure may be a vacuum adiabatic body including a first plate; a second plate; and a vacuum space provided between the first and second plates. The vacuum adiabatic body may include a sealing part for providing the vacuum state space (vacuum space). The vacuum space may be a space in a vacuum state provided in an internal space between the first plate and the second plate. The seal may seal the first plate and the second plate to provide the internal space provided in the vacuum state. The vacuum adiabatic body may optionally include a side plate connecting the first plate to the second plate. In the present disclosure, the expression "plate" may mean at least one of the first and second plates or the side plate. At least a portion of the first and second plates and the side plate may be integrally provided, or at least portions may be sealed to each other. Optionally, the vacuum adiabatic body may include a support that maintains the vacuum space. The vacuum adiabatic body may selectively include a thermal insulator that reduces an amount of heat transfer between a first space provided in vicinity of the first plate and a second space provided in vicinity of the second plate or reduces an amount of heat transfer between the first plate and the second plate.

Optionally, the vacuum adiabatic body may include a component coupling portion provided on at least a portion of the plate. Optionally, the vacuum adiabatic body may include another adiabatic body. Another adiabatic body may be provided to be connected to the vacuum adiabatic body. Another adiabatic body may be an adiabatic body having a degree of vacuum, which is equal to or different from a degree of vacuum of the vacuum adiabatic body. Another adiabatic body may be an adiabatic body that does not include a degree of vacuum less than that of the vacuum adiabatic body or a portion that is in a vacuum state therein. In this case, it may be advantageous to connect another object to another adiabatic body.

In the present disclosure, a direction along a wall defining the vacuum space may include a longitudinal direction of the vacuum space and a height direction of the vacuum space. The height direction of the vacuum space may be defined as any one direction among virtual lines connecting the first space to the second space to be described later while passing through the vacuum space. The longitudinal direction of the vacuum space may be defined as a direction perpendicular to the set height direction of the vacuum space.

In the present disclosure, that an object A is connected to an object B means that at least a portion of the object A and at least a portion of the object B are directly connected to each other, or that at least a portion of the object A and at least a portion of the object B are connected to each other through an intermedium interposed between the objects A and B. The intermedium may be provided on at least one of the object A or the object B. The connection may include that the object A is connected to the intermedium, and the intermedium is connected to the object B.

A portion of the intermedium may include a portion connected to either one of the object A and the object B. The other portion of the intermedium may include a portion connected to the other of the object A and the object B. As a modified example, the connection of the object A to the object B may include that the object A and the object B are integrally prepared in a shape connected in the above-described manner. In the present disclosure, an embodiment of the connection may be support, combine, or a seal, which will be described later.

In the present disclosure, that the object A is supported by the object B means that the object A is restricted in movement by the object B in one or more of the +X, -X, +Y, -Y, +Z, and - Z axis directions. In the present invention, an embodiment of the support may be the combine or seal, which will be described later. In the present invention, that the object A is combined with the object B may define that the object A is restricted in movement by the object B in one or more of the X, Y, and Z-axis directions.

In the present disclosure, an embodiment of the combining may be the sealing to be described later. In the present disclosure, that the object A is sealed to the object B may define a state in which movement of a fluid is not allowed at the portion at which the object A and the object B are connected. In the present disclosure, one or more objects, i.e., at least a portion of the object A and the object B, may be defined as including a portion of the object A, the whole of the object A, a portion of the object B, the whole of the object B, a portion of the object A and a portion of the object B, a portion of the object A and the whole of the object B, the whole of the object A and a portion of the object B, and the whole of the object A and the whole of the object B. In the present disclosure, that the plate A may be a wall defining the space A may be defined as that at least a portion of the plate A may be a wall defining at least a portion of the space A.

That is, at least a portion of the plate A may be a wall forming the space A, or the plate A may be a wall forming at least a portion of the space A. In the present disclosure, a central portion of the object may be defined as a central portion among three divided portions when the object is divided into three sections based on the longitudinal direction of the object. A periphery of the object may be defined as a portion disposed at a left or right side of the central portion among the three divided portions. The periphery of the object may include a surface that is in contact with the central portion and a surface opposite thereto.

The opposite side may be defined as a border or edge of the object. Examples of the object may include a vacuum adiabatic body, a plate, a heat transfer resistor, a support, a vacuum space, and various components to be introduced in the present disclosure. In the present disclosure, a degree of heat transfer resistance may indicate a degree to which an object resists heat transfer and may be defined as a value determined by a shape including a thickness of the object, a material of the object, and a processing method of the object. The degree of the heat transfer resistance may be defined as the sum of a degree of conduction resistance, a degree of radiation resistance, and a degree of convection resistance.

The vacuum adiabatic body according to the present disclosure may include a heat transfer path defined between spaces having different temperatures, or a heat transfer path defined between plates having different temperatures. For example, the vacuum adiabatic body according to the present disclosure may include a heat transfer path through which cold is transferred from a low-temperature plate to a high-temperature plate. In the present disclosure, when a curved portion includes a first portion extending in a first direction and a second portion extending in a second direction different from the first direction, the curved portion may be defined as a portion that connects the first portion to the second portion (including 90 degrees).

In the present disclosure, the vacuum adiabatic body may optionally include a component coupling portion. The component coupling portion may be defined as a portion provided on the plate to which components are connected to each other. The component connected to the plate may be defined as a penetration portion disposed to pass through at least a portion of the plate and a surface component disposed to be connected to a surface of at least a portion of the plate.

At least one of the penetration component or the surface component may be connected to the component coupling portion. The penetration component may be a component that defines a path through which a fluid (electricity, refrigerant, water, air, etc.) passes mainly. In the present disclosure, the fluid is defined as any kind of flowing material. The fluid includes moving solids, liquids, gases, and electricity. For example, the component may be a component that defines a path through which a refrigerant for heat exchange passes, such as a suction line heat exchanger (SLHX) or a refrigerant tube.

The component may be an electric wire that supplies electricity to an apparatus. As another example, the component may be a component that defines a path through which air passes, such as a cold duct, a hot air duct, and an exhaust port. As another example, the component may be a path through which a fluid such as coolant, hot water, ice, and defrost water pass. The surface component may include at least one of a peripheral adiabatic body, a side panel, injected foam, a pre-prepared resin, a hinge, a latch, a basket, a drawer, a shelf, a light, a sensor, an evaporator, a front decor, a hotline, a heater, an exterior cover, or another adiabatic body.

As an example to which the vacuum adiabatic body is applied, the present disclosure may include an apparatus having the vacuum adiabatic body. Examples of the apparatus may include an appliance. Examples of the appliance may include home appliances including a refrigerator, a cooking appliance, a washing machine, a dishwasher, and an air conditioner, etc. As an example in which the vacuum adiabatic body is applied to the apparatus, the vacuum adiabatic body may constitute at least a portion of a body and a door of the apparatus.

As an example of the door, the vacuum adiabatic body may constitute at least a portion of a general door and a door-in-door (DID) that is in direct contact with the body. Here, the door-in-door may mean a small door placed inside the general door. As another example to which the vacuum adiabatic body is applied, the present disclosure may include a wall having the vacuum adiabatic body. Examples of the wall may include a wall of a building, which includes a window.

Hereinafter, the present disclosure will be described in detail with reference to the accompanying drawings. Each of the drawings accompanying the embodiment may be different from, exaggerated, or simply indicated from an actual article, and detailed components may be indicated with simplified features. The embodiment should not be interpreted as being limited only to the size, structure, and shape presented in the drawings. In the embodiments accompanying each of the drawings, unless the descriptions conflict with each other, some configurations in the drawings of one embodiment may be applied to some configurations of the drawings in another embodiment, and some structures in one embodiment may be applied to some structures in another embodiment.

In the description of the drawings for the embodiment, the same reference numerals may be assigned to different drawings as reference numerals of specific components constituting the embodiment. Components having the same reference number may perform the same function. For example, the first plate constituting the vacuum adiabatic body has a portion corresponding to the first space throughout all embodiments and is indicated by reference number 10. The first plate may have the same number for all embodiments and may have a portion corresponding to the first space, but the shape of the first plate may be different in each embodiment. Not only the first plate, but also the side plate, the second plate, and another adiabatic body may be understood as well.

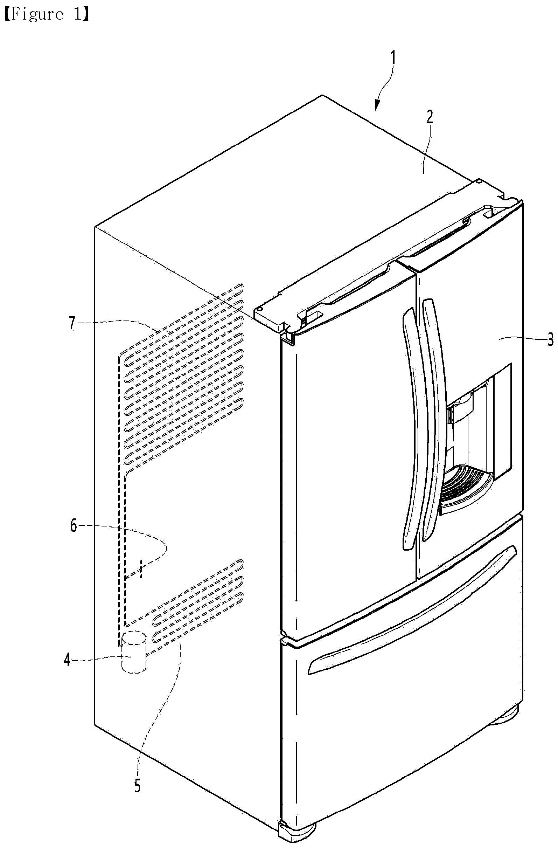

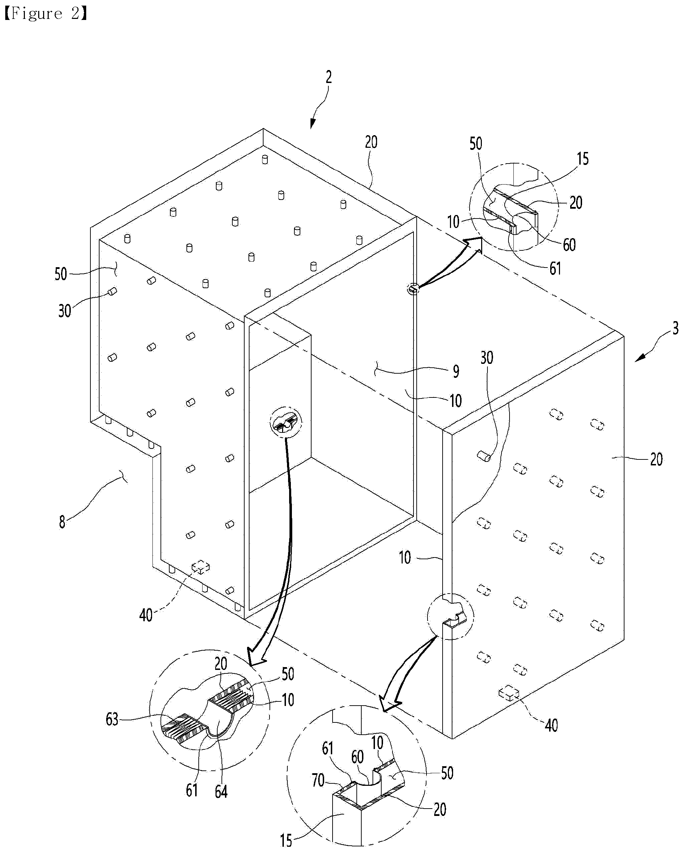

Fig. 1 is a perspective view of a refrigerator according to an embodiment, and FIG. 2 is a schematic view illustrating a vacuum adiabatic body used for a body and a door of the refrigerator. Referring to Fig. 1, the refrigerator 1 includes a main body 2 provided with a cavity 9 capable of storing storage goods and a door 3 provided to open and close the main body 2.

The door 3 may be rotatably or slidably disposed to open or close the cavity 9. The cavity 9 may provide at least one of a refrigerating compartment and a freezing compartment.

A cold source that supplies cold to the cavity may be provided. For example, the cold source may be an evaporator 7 that evaporates the refrigerant to take heat. The evaporator 7 may be connected to a compressor 4 that compresses the refrigerant evaporated to the cold source. The evaporator 7 may be connected to a condenser 5 that condenses the compressed refrigerant to the cold source. The evaporator 7 may be connected to an expander 6 that expands the refrigerant condensed in the cold source.

A fan corresponding to the evaporator and the condenser may be provided to promote heat exchange. As another example, the cold source may be a heat absorption surface of a thermoelectric element. A heat absorption sink may be connected to the heat absorption surface of the thermoelectric element. A heat sink may be connected to a heat radiation surface of the thermoelectric element. A fan corresponding to the heat absorption surface and the heat generation surface may be provided to promote heat exchange.

Referring to FIG. 2, plates 10, 15, and 20 may be walls defining the vacuum space. The plates may be walls that partition the vacuum space from an external space of the vacuum space. An example of the plates is as follows. The present disclosure may be any one of the following examples or a combination of two or more examples.

The plate may be provided as one portion or may be provided to include at least two portions connected to each other.

As a first example, the plate may include at least two portions connected to each other in a direction along a wall defining the vacuum space. Any one of the two portions may include a portion (e.g., a first portion) defining the vacuum space. The first portion may be a single portion or may include at least two portions that are sealed to each other. The other one of the two portions may include a portion (e.g., a second portion) extending from the first portion of the first plate in a direction away from the vacuum space or extending in an inner direction of the vacuum space.

As a second example, the plate may include at least two layers connected to each other in a thickness direction of the plate. Any one of the two layers may include a layer (e.g., the first portion) defining the vacuum space. The other one of the two layers may include a portion (e.g., the second portion) provided in an external space (e.g., a first space and a second space) of the vacuum space.

In this case, the second portion may be defined as an outer cover of the plate. The other one of the two layers may include a portion (e.g., the second portion) provided in the vacuum space. In this case, the second portion may be defined as an inner cover of the plate.

The plate may include a first plate 10 and a second plate 20. One surface of the first plate (the inner surface of the first plate) provides a wall defining the vacuum space, and the other surface (the outer surface of the first plate) of the first plate A wall defining the first space may be provided. The first space may be a space provided in the vicinity of the first plate, a space defined by the apparatus, or an internal space of the apparatus. In this case, the first plate may be referred to as an inner case. When the first plate and the additional member define the internal space, the first plate and the additional member may be referred to as an inner case.

The inner case may include two or more layers. In this case, one of the plurality of layers may be referred to as an inner panel. One surface of the second plate (the inner surface of the second plate) provides a wall defining the vacuum space, and the other surface (the outer surface of the first plate) of the second plate A wall defining the second space may be provided. The second space may be a space provided in vicinity of the second plate, another space defined by the apparatus, or an external space of the apparatus. In this case, the second plate may be referred to as an outer case. When the second plate and the additional member define the external space, the second plate and the additional member may be referred to as an outer case. The outer case may include two or more layers. In this case, one of the plurality of layers may be referred to as an outer panel.

The second space may be a space having a temperature higher than that of the first space or a space having a temperature lower than that of the first space. Optionally, the plate may include a side plate 15. In FIG. 2, the side plate may also perform a function of a conductive resistance sheet 60 to be described later, according to the disposition of the side plate. The side plate may include a portion extending in a height direction of a space defined between the first plate and the second plate.

The side plate may include a portion extending in a height direction of the vacuum space.

One surface of the side plate may provide a wall defining the vacuum space, and the other surface of the side plate may provide a wall defining an external space of the vacuum space. The external space of the vacuum space may be at least one of the first space or the second space or a space in which another adiabatic body to be described later is disposed. The side plate may be integrally provided by extending at least one of the first plate or the second plate or a separate component connected to at least one of the first plate or the second plate.

The plate may optionally include a curved portion. In the present disclosure, the plate including a curved portion may be referred to as a bent plate. The curved portion may include at least one of the first plate, the second plate, the side plate, between the first plate and the second plate, between the first plate and the side plate, or between the second plate and the side plate. The plate may include at least one of a first curved portion or a second curved portion, an example of which is as follows.

First, the side plate may include the first curved portion. A portion of the first curved portion may include a portion connected to the first plate. Another portion of the first curved portion may include a portion connected to the second curved portion. In this case, a curvature radius of each of the first curved portion and the second curved portion may be large. The other portion of the first curved portion may be connected to an additional straight portion or an additional curved portion, which are provided between the first curved portion and the second curved portion. In this case, a curvature radius of each of the first curved portion and the second curved portion may be small.

Second, the side plate may include the second curved portion. A portion of the second curved portion may include a portion connected to the second plate. The other portion of the second curved portion may include a portion connected to the first curved portion. In this case, a curvature radius of each of the first curved portion and the second curved portion may be large. The other portion of the second curved portion may be connected to an additional straight portion or an additional curved portion, which are provided between the first curved portion and the second curved portion. In this case, a curvature radius of each of the first curved portion and the second curved portion may be small. Here, the straight portion may be defined as a portion having a curvature radius greater than that of the curved portion. The straight portion may be understood as a portion having a perfect plane or a curvature radius greater than that of the curved portion. Third, the first plate may include the first curved portion. A portion of the first curved portion may include a portion connected to the side plate. A portion connected to the side plate may be provided at a position that is away from the second plate at a portion at which the first plate extends in the longitudinal direction of the vacuum space.

Fourth, the second plate may include the second curved portion. A portion of the second curved portion may include a portion connected to the side plate. A portion connected to the side plate may be provided at a position that is away from the first plate at a portion at which the second plate extends in the longitudinal direction of the vacuum space. The present disclosure may include a combination of any one of the first and second examples described above and any one of the third and fourth examples described above.

In the present disclosure, the vacuum space 50 may be defined as a third space. The vacuum space may be a space in which a vacuum pressure is maintained. In the present disclosure, the expression that a vacuum degree of A is higher than that of B means that a vacuum pressure of A is lower than that of B.

In the present disclosure, the seal 61 may be a portion provided between the first plate and the second plate. Examples of sealing are as follows. The present disclosure may be any one of the following examples or a combination of two or more examples. The sealing may include fusion welding for coupling the plurality of objects by melting at least a portion of the plurality of objects. For example, the first plate and the second plate may be welded by laser welding in a state in which a melting bond such as a filler metal is not interposed therebetween, a portion of the first and second plates and a portion of the component coupling portion may be welded by highfrequency brazing or the like, or a plurality of objects may be welded by a melting bond that generates heat. The sealing may include pressure welding for coupling the plurality of objects by a mechanical pressure applied to at least a portion of the plurality of objects.

For example, as a component connected to the component coupling portion, an object made of a material having a degree of deformation resistance less than that of the plate may be pressure-welded by a method such as pinch-off.

A machine room 8 may be optionally provided outside the vacuum adiabatic body. The machine room may be defined as a space in which components connected to the cold source are accommodated. Optionally, the vacuum adiabatic body may include a port 40. The port may be provided at any one side of the vacuum adiabatic body to discharge air of the vacuum space 50.

Optionally, the vacuum adiabatic body may include a conduit 64 passing through the vacuum space 50 to install components connected to the first space and the second space.

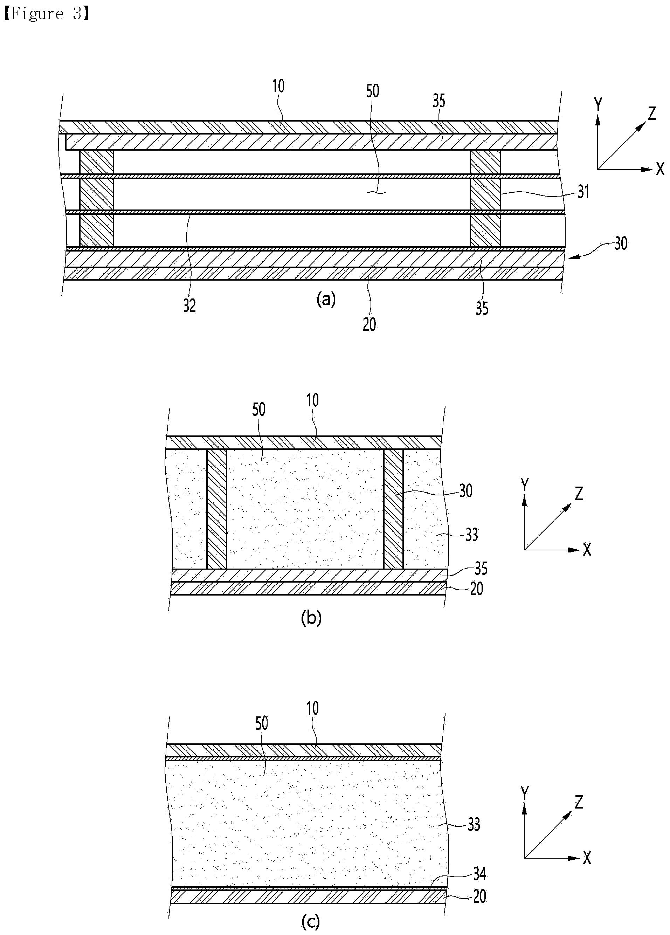

Fig. 3 is a view illustrating an example of a support that maintains the vacuum space. An example of the support is as follows. The present disclosure may be any one of the following examples or a combination of two or more examples.

The supports 30, 31, 33, and 35 may be provided to support at least a portion of the plate and a heat transfer resistor to be described later, thereby reducing deformation of at least some of the vacuum space 50, the plate, and the heat transfer resistor to be described later due to external force.

The external force may include at least one of a vacuum pressure or external force excluding the vacuum pressure. When the deformation occurs in a direction in which a height of the vacuum space is lower, the support may reduce an increase in at least one of radiant heat conduction, gas heat conduction, surface heat conduction, or support heat conduction, which will be described later.

The support may be an object provided to maintain a gap between the first plate and the second plate or an object provided to support the heat transfer resistor. The support may have a degree of deformation resistance greater than that of the plate or be provided to a portion having weak degree of deformation resistance among portions constituting the vacuum adiabatic body, the apparatus having the vacuum adiabatic body, and the wall having the vacuum adiabatic body.

According to an embodiment, a degree of deformation resistance represents a degree to which an object resists deformation due to external force applied to the object and is a value determined by a shape including a thickness of the object, a material of the object, a processing method of the object, and the like. Examples of the portions having the weak degree of deformation resistance include the vicinity of the curved portion defined by the plate, at least a portion of the curved portion, the vicinity of an opening defined in the body of the apparatus, which is provided by the plate, or at least a portion of the opening.

The support may be disposed to surround at least a portion of the curved portion or the opening or may be provided to correspond to the shape of the curved portion or the opening. However, it is not excluded that the support is provided in other portions. The opening may be understood as a portion of the apparatus including the body and the door capable of opening or closing the opening defined in the body.

An example in which the support is provided to support the plate is as follows. First, at least a portion of the support may be provided in a space defined inside the plate. The plate may include a portion including a plurality of layers, and the support may be provided between the plurality of layers. Optionally, the support may be provided to be connected to at least a portion of the plurality of layers or be provided to support at least a portion of the plurality of layers. Second, at least a portion of the support may be provided to be connected to a surface defined on the outside of the plate. The support may be provided in the vacuum space or an external space of the vacuum space. For example, the plate may include a plurality of layers, and the support may be provided as any one of the plurality of layers. Optionally, the support may be provided to support the other one of the plurality of layers. For example, the plate may include a plurality of portions extending in the longitudinal direction, and the support may be provided as any one of the plurality of portions.

Optionally, the support may be provided to support the other one of the plurality of parts. As further another example, the support may be provided in the vacuum space or the external space of the vacuum space as a separate component, which is distinguished from the plate. Optionally, the support may be provided to support at least a portion of a surface defined on the outside of the plate. Optionally, the support may be provided to support one surface of the first plate and one surface of the second plate.

One surface of the first plate and one surface of the second plate may be provided to face each other.

Third, the support may be provided to be integrated with the plate. An example in which the support is provided to support the heat transfer resistor may be understood instead of the example in which the support is provided to support the plate. A duplicated description will be omitted.

An example of the support in which heat transfer through the support is designed to be reduced is as follows. First, at least a portion of the components disposed in the vicinity of the support may be provided so as not to be in contact with the support or provided in an empty space provided by the support. Examples of the components include a tube or component connected to the heat transfer resistor to be described later, an exhaust port, a getter port, a tube or component passing through the vacuum space, or a tube or component of which at least a portion is disposed in the vacuum space.

Exampled of the tube may include the exhaust port, a getter port. Examples of the empty space may include an empty space provided in the support, an empty space provided between the plurality of supports, and an empty space provided between the support and a separate component that is distinguished from the support.

Optionally, at least a portion of the component may be disposed in a through-hole defined in the support, be disposed between the plurality of bars, be disposed between the plurality of connection plates, or be disposed between the plurality of support plates. Optionally, at least a portion of the component may be disposed in a spaced space between the plurality bars, be disposed in a spaced space between the plurality of connection plates, or be disposed in a spaced space between the plurality of support plates. Second, the adiabatic body may be provided on at least a portion of the support or in the vicinity of at least a portion of the support.

The adiabatic body may be provided to be in contact with the support or provided so as not to be in contact with the support. The adiabatic body may be provided at a portion in which the support and the plate are in contact with each other. The adiabatic body may be provided on at least a portion of one surface and the other surface of the support or be provided to cover at least a portion of one surface and the other surface of the support. The adiabatic body may be provided on at least a portion of a periphery of one surface and a periphery of the other surface of the support or be provided to cover at least a portion of a periphery of one surface and a periphery of the other surface of the support.

The support may include a plurality of bars. The adiabatic body may be disposed on an area from a point at which any one of the plurality of bars is disposed to a midpoint between the one bar and the surrounding bars. Third, when cold is transferred through the support, a heat source may be disposed at a position at which the heat adiabatic body described in the second example is disposed. When a temperature of the first space is lower than a temperature of the second space, the heat source may be disposed on the second plate or in the vicinity of the second plate. When heat is transmitted through the support, a cold source may be disposed at a position at which the heat adiabatic body described in the second example is disposed.

When a temperature of the first space is higher than a temperature of the second space, the cold source may be disposed on the second plate or in the vicinity of the second plate. As fourth example, the support may include a portion having heat transfer resistance higher than a metal or a portion having heat transfer resistance higher than the plate. The support may include a portion having heat transfer resistance less than that of another adiabatic body.

The support may include at least one of a non-metal material, PPS, and glass fiber (GF), low outgassing PC, PPS, or LCP. This is done for a reason in which high compressive strength, low outgassing, and a water absorption rate, low thermal conductivity, high compressive strength at a high temperature, and excellent workability are being capable of obtained.

Examples of the support may be the bars 30 and 31, the connection plate 35, the support plate 35, a porous material 33, and a filler 33. In this embodiment, the support may include any one of the above examples, or an example in which at least two examples are combined.

As first example, the support may include bars 30 and 31. The bar may include a portion extending in a direction in which the first plate and the second plate are connected to each other to support a gap between the first plate and the second plate. The bar may include a portion extending in a height direction of the vacuum space and a portion extending in a direction that is substantially perpendicular to the direction in which the plate extends. The bar may be provided to support only one of the first plate and the second plate or may be provided both the first plate and the second plate.

For example, one surface of the bar may be provided to support a portion of the plate. the other surface of the bar may be provided so as not to be in contact with the other portion of the plate. As another example, one surface of the bar may be provided to support at least a portion of the plate. the other surface of the bar may be provided to support the other portion of the plate.

The support may include a bar having an empty space therein or a plurality of bars, and an empty space are provided between the plurality of bars. In addition, the support may include a bar, and the bar may be disposed to provide an empty space between the bar and a separate component that is distinguished from the bar.

The support may selectively include a connection plate 35 including a portion connected to the bar or a portion connecting the plurality of bars to each other. The connection plate may include a portion extending in the longitudinal direction of the vacuum space or a portion extending in the direction in which the plate extends. An XZ-plane cross-sectional area of the connection plate may be greater than an XZ-plane cross-sectional area of the bar. The connection plate may be provided on at least one of one surface and the other surface of the bar or may be provided between one surface and the other surface of the bar.

At least one of one surface and the other surface of the bar may be a surface on which the bar supports the plate. The shape of the connection plate is not limited. The support may include a connection plate having an empty space therein or a plurality of connection plates. An empty space may be provided between the plurality of connection plates. In addition, the support may include a connection plate.

The connection plate may be disposed to provide an empty space between the connection plate and a separate component that is distinguished from the connection plate. As a second example, the support may include a support plate 35. The support plate may include a portion extending in the longitudinal direction of the vacuum space or a portion extending in the direction in which the plate extends. The support plate may be provided to support only one of the first plate and second plate.

The support plate may be provided to support both the first plate and the second plate. For example, one surface of the support plate may be provided to support a portion of the plate, and the other surface of the support plate may be provided so as not to be in contact with the other portion of the plate. As another example, one surface of the support plate may be provided to support at least a portion of the plate, and the other surface of the support plate may be provided to support the other portion of the plate. A cross-sectional shape of the support plate is not limited.

The support may include a support plate having an empty space therein or a plurality of support plates, and an empty space are provided between the plurality of support plates. In addition, the support may include a support plate, and the support plate may be disposed to provide an empty space between the support plate and a separate component that is distinguished from the support plate.

As a third example, the support may include a porous material 33 or a filler 33. The inside of the vacuum space may be supported by the porous material or the filler. The inside of the vacuum space may be completely filled by the porous material or the filler. The support may include a plurality of porous materials or a plurality of fillers. The plurality of porous materials or the plurality of fillers may be disposed to be in contact with each other.

When an empty space is provided inside the porous material, provided between the plurality of porous materials, or provided between the porous material and a separate component that is distinguished from the porous material, the porous material may be understood as including any one of the aforementioned bar, connection plate, and support plate.

When an empty space is provided inside the filler, provided between the plurality of fillers, or provided between the filler and a separate component that is distinguished from the filler, the filler may be understood as including any one of the aforementioned bar, connection plate, and support plate. The support according to the present disclosure may include any one of the above examples or an example in which two or more examples are combined.

Referring to Fig. 3a, as an embodiment, the support may include a bar 31 and a connection plate and support plate 35. The connection plate and the supporting plate may be designed separately. Referring to Fig. 3b, as an embodiment, the support may include a bar 31, a connection plate and support plate 35, and a porous material 33 filled in the vacuum space. The porous material 33 may have emissivity greater than that of stainless steel, which is a material of the plate, but since the vacuum space is filled, resistance efficiency of radiant heat transfer is high.

The porous material may also function as a heat transfer resistor to be described later. More preferably, the porous material may perform a function of a radiation resistance sheet to be described later. Referring to Fig. 3c, as an embodiment, the support may include a porous material 33 or a filler 33. The porous material 33 and the filler may be provided in a compressed state to maintain a gap between the vacuum space.

The film 34 may be provided in a state in which a hole is punched as, for example, a PE material. The porous material 33 or the filler may perform both a function of the heat transfer resistor and a function of the support, which will be described later. More preferably, the porous material may perform both a function of the radiation resistance sheet and a function of the support to be described later.

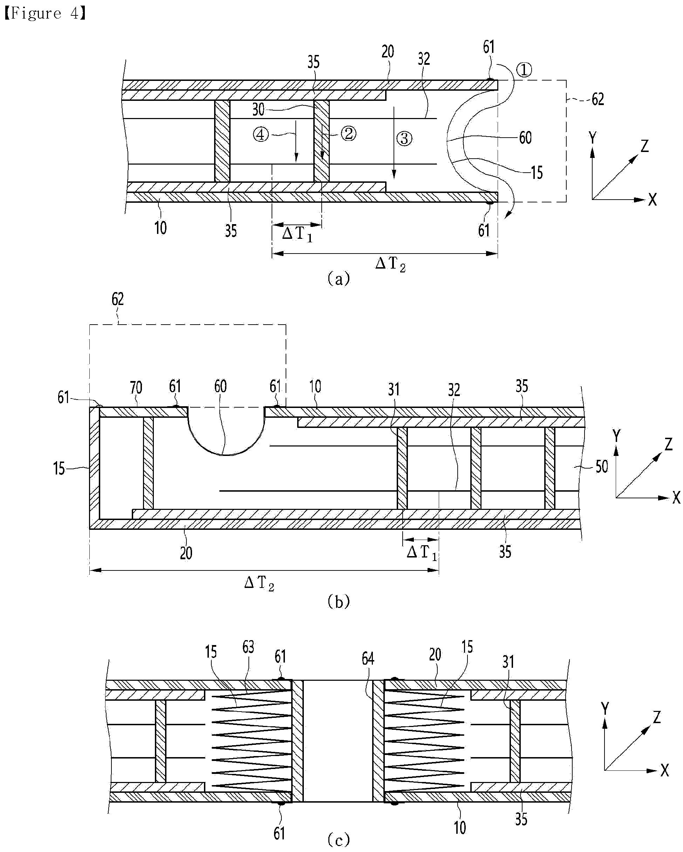

Fig. 4 is a view for explaining an example of the vacuum adiabatic body based on heat transfer resistors 32, 33, 60, and 63 (e.g., thermal insulator and a heat transfer resistance body). The vacuum adiabatic body according to the present disclosure may optionally include a heat transfer resistor. An example of the heat transfer resistor is as follows. The present disclosure may be any one of the following examples or a combination of two or more examples.

The heat transfer resistors 32, 33, 60, and 63 may be objects that reduce an amount of heat transfer between the first space and the second space or objects that reduce an amount of heat transfer between the first plate and the second plate. The heat transfer resistor may be disposed on a heat transfer path defined between the first space and the second space. The heat transfer resistor may be disposed on a heat transfer path formed between the first plate and the second plate. The heat transfer resistor may include a portion extending in a direction along a wall defining the vacuum space.

The heat transfer resistor may include a portion extending in a direction in which the plate extends. Optionally, the heat transfer resistor may include a portion extending from the plate in a direction away from the vacuum space. The heat transfer resistor may be provided on at least a portion of the periphery of the first plate or the periphery of the second plate.

The heat transfer resistor may be provided on at least a portion of an edge of the first plate or an edge of the second plate. The heat transfer resistor may be provided at a portion, in which the through-hole is defined. The heat transfer resistor may be provided as a tube connected to the through-hole. A separate tube or a separate component that is distinguished from the tube may be disposed inside the tube.

Exampled of the aforementioned tube may include the exhaust port, a getter port The heat transfer resistor may include a portion having heat transfer resistance greater than that of the plate. In this case, adiabatic performance of the vacuum adiabatic body may be further improved. A shield 62 may be provided on the outside of the heat transfer resistor to be insulated. The inside of the heat transfer resistor may be insulated by the vacuum space. The shield may be provided as a porous material or a filler that is in contact with the inside of the heat transfer resistor.

The shield may be an adiabatic structure that is exemplified by a separate gasket placed outside the inside of the heat transfer resistor. The heat transfer resistor may be a wall defining the third space.

An example in which the heat transfer resistor is connected to the plate may be understood as replacing the support with the heat transfer resistor in an example in which the support is provided to support the plate. A duplicate description will be omitted. The example in which the heat transfer resistor is connected to the support may be understood as replacing the plate with the support in the example in which the heat transfer resistor is connected to the plate. A duplicate description will be omitted. The example of reducing heat transfer via the heat transfer body may be applied as a substitute the example of reducing the heat transfer via the support, and thus, the same explanation will be omitted.

In the present disclosure, the heat transfer resistor may be one of a radiation resistance sheet 32, a porous material 33, a filler 33, and a conductive resistance sheet. In the present disclosure, the heat transfer resistor may include a combination of at least two of the radiation resistance sheet 32, the porous material 33, the filler 33, and the conductive resistance sheet. As a first example, the heat transfer resistor may include a radiation resistance sheet 32.

The radiation resistance sheet may include a portion having heat transfer resistance greater than that of the plate, and the heat transfer resistance may be a degree of resistance to heat transfer by radiation. The support may perform a function of the radiation resistance sheet together. A conductive resistance sheet to be described later may perform the function of the radiation resistance sheet together. As a second example, the heat transfer resistor may include conduction resistance sheets 60 and 63.

The conductive resistance sheet may include a portion having heat transfer resistance greater than that of the plate, and the heat transfer resistance may be a degree of resistance to heat transfer by conduction. For example, the conductive resistance sheet may have a thickness less than that of at least a portion of the plate. As another example, the conductive resistance sheet may include one end and the other end, and a length of the conductive resistance sheet may be longer than a straight distance connecting one end of the conductive resistance sheet to the other end of the conductive resistance sheet.

As another example, the conductive resistance sheet may include a material having resistance to heat transfer greater than that of the plate by conduction. As another example, the heat transfer resistor may include a portion having a curvature radius less than that of the plate.

Referring to Fig. 4a, for example, a conductive resistance sheet may be provided on a side plate connecting the first plate to the second plate. Referring to Fig. 4b, for example, a conductive resistance sheet 60 may be provided on at least a portion of the first plate and the second plate. A connection frame 70 may be further provided outside the conductive resistance sheet. The connection frame may be a portion from which the first plate or the second plate extends or a portion from which the side plate extends.

Optionally, the connection frame 70 may include a portion at which a component for sealing the door and the body and a component disposed outside the vacuum space such as the exhaust port and the getter port, which are required for the exhaust process, are connected to each other.

Referring to Fig. 4c, for example, a conductive resistance sheet may be provided on a side plate connecting the first plate to the second plate. The conductive resistance sheet may be installed in a through-hole passing through the vacuum space. The conduit 64 may be provided separately outside the conductive resistance sheet. The conductive resistance sheet may be provided in a pleated shape. Through this, the heat transfer path may be lengthened, and deformation due to a pressure difference may be prevented. A separate shielding member for insulating the conductive resistance sheet 63 may also be provided. The conductive resistance sheet may include a portion having a degree of deformation resistance less than that of at least one of the plate, the radiation resistance sheet, or the support. The radiation resistance sheet may include a portion having a degree of deformation resistance less than that of at least one of the plate or the support. The plate may include a portion having a degree of deformation resistance less than that of the support. The conductive resistance sheet may include a portion having conductive heat transfer resistance greater than that of at least one of the plate, the radiation resistance sheet, or the support. The radiation resistance sheet may include a portion having radiation heat transfer resistance greater than that of at least one of the plate, the conductive resistance sheet, or the support. The support may include a portion having heat transfer resistance greater than that of the plate.

For example, at least one of the plate, the conductive resistance sheet, or the connection frame may include stainless steel material, the radiation resistance sheet may include aluminum, and the support may include a resin material.

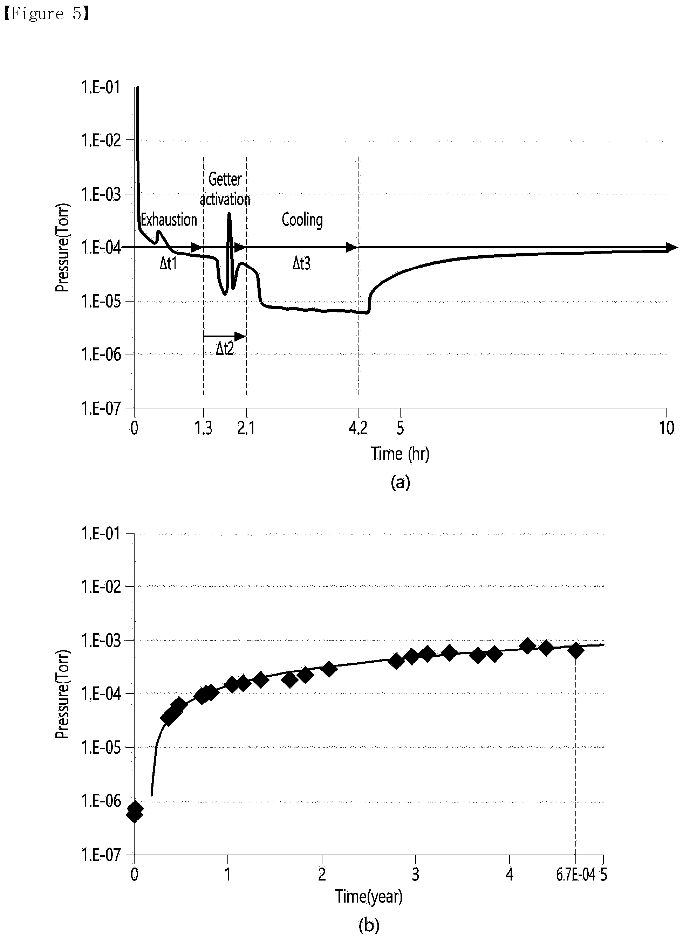

Fig. 5 is a graph for observing a process of exhausting the inside of the vacuum adiabatic body with a time and pressure when the support is used. An example of a vacuum adiabatic body vacuum exhaust process vacuum is as follows. The present disclosure may be any one of the following examples or a combination of two or more examples.

While the exhaust process is being performed, an outgassing process, which is a process in which a gas of the vacuum space is discharged, or a potential gas remaining in the components of the vacuum adiabatic body is discharged, may be performed. As an example of the outgassing process, the exhaust process may include at least one of heating or drying the vacuum adiabatic body, providing a vacuum pressure to the vacuum adiabatic body, or providing a getter to the vacuum adiabatic body. In this case, it is possible to promote the vaporization and exhaust of the potential gas remaining in the component provided in the vacuum space. The exhaust process may include a process of cooling the vacuum adiabatic body. The cooling process may be performed after the process of heating or drying the vacuum adiabatic body is performed. The process of heating or drying the vacuum adiabatic body process of providing the vacuum pressure to the vacuum adiabatic body may be performed together.

The process of heating or drying the vacuum adiabatic body and the process of providing the getter to the vacuum adiabatic body may be performed together. After the process of heating or drying the vacuum adiabatic body is performed, the process of cooling the vacuum adiabatic body may be performed.

The process of providing the vacuum pressure to the vacuum adiabatic body and the process of providing the getter to the vacuum adiabatic body may be performed so as not to overlap each other.

For example, after the process of providing the vacuum pressure to the vacuum adiabatic body is performed, the process of providing the getter to the vacuum adiabatic body may be performed. When the vacuum pressure is provided to the vacuum adiabatic body, a pressure of the vacuum space may drop to a certain level and then no longer drop. Here, after stopping the process of providing the vacuum pressure to the vacuum adiabatic body, the getter may be input. As an example of stopping the process of providing the vacuum pressure to the vacuum adiabatic body, an operation of a vacuum pump connected to the vacuum space may be stopped. When inputting the getter, the process of heating or drying the vacuum adiabatic body may be performed together. Through this, the outgassing may be promoted. As another example, after the process of providing the getter to the vacuum adiabatic body is performed, the process of providing the vacuum pressure to the vacuum adiabatic body may be performed.

The time during which the vacuum adiabatic body vacuum exhaust process is performed may be referred to as a vacuum exhaust time. The vacuum exhaust time includes at least one of a time Δ1 during which the process of heating or drying the vacuum adiabatic body is performed, a time Δt2 during which the process of maintaining the getter in the vacuum adiabatic body is performed, of a time Δt3 during which the process of cooling the vacuum adiabatic body is performed. Examples of times Δt1, Δt2, and Δt3 are as follows. The present disclosure may be any one of the following examples or a combination of two or more examples. **In** the vacuum adiabatic body vacuum exhaust process, the time Δtl may be a time tla or more and a time t1b or less. As a first example, the time t1a may be greater than or equal to about 0.2 hr and less than or equal to about 0.5 hr. The time t1b may be greater than or equal to about 1 hr and less than or equal to about 24.0 hr.

The time Δt1 may be about 0.3 hr or more and about 12.0 hr or less. The time Δt1 may be about 0.4 hr or more and about 8.0 hr or less. The time Δt1 may be about 0.5 hr or more and about 4.0 hr or less. **In** this case, even if the Δt1 is kept as short as possible, the sufficient outgassing may be applied to the vacuum adiabatic body. For example, this case may include a case in which a component of the vacuum adiabatic body, which is exposed to the vacuum space, among the components of the vacuum adiabatic body, has an outgassing rate (%) less than that of any one of the component of the vacuum adiabatic body, which is exposed to the external space of the vacuum space. Specifically, the component exposed to the vacuum space may include a portion having a outgassing rate less than that of a thermoplastic polymer.

More specifically, the support or the radiation resistance sheet may be disposed in the vacuum space, and the outgassing rate of the support may be less than that of the thermoplastic plastic. As another example, this case may include a case in which a component of the vacuum adiabatic body, which is exposed to the vacuum space, among the components of the vacuum adiabatic body, has a max operating temperature (°C) greater than that of any one of the component of the vacuum adiabatic body, which is exposed to the external space of the vacuum space.

In this case, the vacuum adiabatic body may be heated to a higher temperature to increase in outgassing rate. For example, the component exposed to the vacuum space may include a portion having an operating temperature greater than that of the thermoplastic polymer. As a more specific example, the support or the radiation resistance sheet may be disposed in the vacuum space, and a use temperature of the support may be higher than that of the thermoplastic plastic.

As another example, among the components of the vacuum adiabatic body, the component exposed to the vacuum space may contain more metallic portion than a non-metallic portion. That is, a mass of the metallic portion may be greater than a mass of the non-metallic portion, a volume of the metallic portion may be greater than a volume of the non-metallic portion, or an area of the metallic portion exposed to the vacuum space may be greater than an area exposed to the non-metallic portion of the vacuum space. When the components exposed to the vacuum space are provided in plurality, the sum of the volume of the metal material included in the first component and the volume of the metal material included in the second component may be greater than that of the volume of the non-metal material included in the first component and the volume of the non-metal material included in the second component. When the components exposed to the vacuum space are provided in plurality, the sum of the mass of the metal material included in the first component and the mass of the metal material included in the second component may be greater than that of the mass of the non-metal material included in the first component and the mass of the non-metal material included in the second component. When the components exposed to the vacuum space are provided in plurality, the sum of the area of the metal material, which is exposed to the vacuum space and included in the first component, and an area of the metal material, which is exposed to the vacuum space and included in the second component, may be greater than that of the area of the non-metal material, which is exposed to the vacuum space and included in the first component, and an area of the non-metal material, which is exposed to the vacuum space and included in the second component.

As a second example, the time t1a may be greater than or equal to about 0.5 hr and less than or equal to about 1 hr. The time t1b may be greater than or equal to about 24.0 hr and less than or equal to about 65 hr. The time Δt1 may be about 1.0 hr or more and about 48.0 hr or less. The time Δt1 may be about 2 hr or more and about 24.0 hr or less. The time Δt1 may be about 3 hr or more and about 12.0 hr or less.

In this case, it may be the vacuum adiabatic body that needs to maintain the Δt1 as long as possible. In this case, a case opposite to the examples described in the first example or a case in which the component exposed to the vacuum space is made of a thermoplastic material may be an example. A duplicated description will be omitted. In the vacuum adiabatic body vacuum exhaust process, the time Δt1 may be a time t1a or more and a time t1b or less. The time t2a may be greater than or equal to about 0.1 hr and less than or equal to about 0.3 hr. The time t2b may be greater than or equal to about 1 hr and less than or equal to about 5.0 hr.

The time Δt2 may be about 0.2 hr or more and about 3.0 hr or less. The time Δt2 may be about 0.3 hr or more and about 2.0 hr or less. The time Δt2 may be about 0.5 hr or more and about 1.5 hr or less. In this case, even if the time Δt2 is kept as short as possible, the sufficient outgassing through the getter may be applied to the vacuum adiabatic body.

In the vacuum adiabatic body vacuum exhaust process, the time Δt3 may be a time t3a or more and a time t3b or less.

The time t3a may be greater than or equal to about 0.2 hr and less than or equal to about 0.8 hr. The time t3b may be greater than or equal to about 1 hr and less than or equal to about 65.0 hr. The time Δt3 may be about 0.2 hr or more and about 48.0 hr or less. The time Δt3 may be about 0.3 hr or more and about 24.0 hr or less. The time Δt3 may be about 0.4 hr or more and about 12.0 hr or less. The time Δt3 may be about 0.5 hr or more and about 5.0 hr or less. After the heating or drying process is performed during the exhaust process, the cooling process may be performed.

For example, when the heating and/or drying process is performed for a long time, the time Δt3 may be long. The vacuum adiabatic body according to the present disclosure may be manufactured so that the time Δt1 is greater than the time Δt2, the time Δt1 is less than or equal to the time Δt3, or the time Δt3 is greater than the time Δt2.

The following relational expression is satisfied: Δt2<Δt1<Δt3. The vacuum adiabatic body according to an embodiment may be manufactured so that the relational expression: Δt1+Δt2+Δt3 may be greater than or equal to about 0.3 hr and less than or equal to about 70 hr, be greater than or equal to about 1 hr and less than or equal to about 65 hr, or be greater than or equal to about 2 hr and less than or equal to about 24 hr. The relational expression: Δt1+Δt2+Δt3 may be manufactured to be greater than or equal to about 3 hr and less than or equal to about 6 hr.

An example of the vacuum pressure condition during the exhaust process is as follows. The present disclosure may be any one of the following examples or a combination of two or more examples. A minimum value of the vacuum pressure in the vacuum space during the exhaust process may be greater than about 1.8E-6 Torr. The minimum value of the vacuum pressure may be greater than about 1.8E-6 Torr and less than or equal to about 1.0E-4 Torr, be greater than about 0.5E-6 Torr and less than or equal to about 1.0E-4 Torr, or be greater than about 0.5E-6 Torr and less than or equal to about 0.5E-5 Torr. The minimum value of the vacuum pressure may be greater than about 0.5E-6 Torr and less than about 1.0E-5 Torr.

As such, the limitation in which the minimum value of the vacuum pressure provided during the exhaust process is because, even if the pressure is reduced through the vacuum pump during the exhaust process, the decrease in vacuum pressure is slowed below a certain level.

As an embodiment, after the exhaust process is performed, the vacuum pressure of the vacuum space may be maintained at a pressure greater than or equal to about 1.0E-5 Torr and less than or equal to about 5.0E-1 Torr. The maintained vacuum pressure may be greater than or equal to about 1.0E-5 Torr and less than or equal to about 1.0E-1 Torr, be greater than or equal to about 1.0E-5 Torr and less than or equal to about 1.0E-2 Torr, be greater than or equal to about 1.0E-4 Torr and less than or equal to about 1.0E-2 Torr, or be greater than or equal to about 1.0E-5 Torr and less than or equal to about 1.0E-3 Torr. As a result of predicting the change in vacuum pressure with an accelerated experiment of two example products, one product may be provided so that the vacuum pressure is maintained below about 1.0E-04Torr even after about 16.3 years, and the other product may be provided so that the vacuum pressure is maintained below about 1.0E-04Torr even after about 17.8 years.

As described above, the vacuum pressure of the vacuum adiabatic body may be used industrially only when it is maintained below a predetermined level even if there is a change over time.

Fig. 5a is a graph of an elapsing time and pressure in the exhaust process according to an example, and Fig. 5b is a view explaining results of a vacuum maintenance test in the acceleration experiment of the vacuum adiabatic body of the refrigerator having an internal volume of about 128 liters.

Referring to Fig. 5b, it is seen that the vacuum pressure gradually increases according to the aging. For example, it is confirmed that the vacuum pressure is about 6.7E-04 Torr after about 4.7 years, about 1.7E-03 Torr after about 10 years, and about 1.0E-02 Torr after about 59 years. According to these experimental results, it is confirmed that the vacuum adiabatic body according to the embodiment is sufficiently industrially applicable.

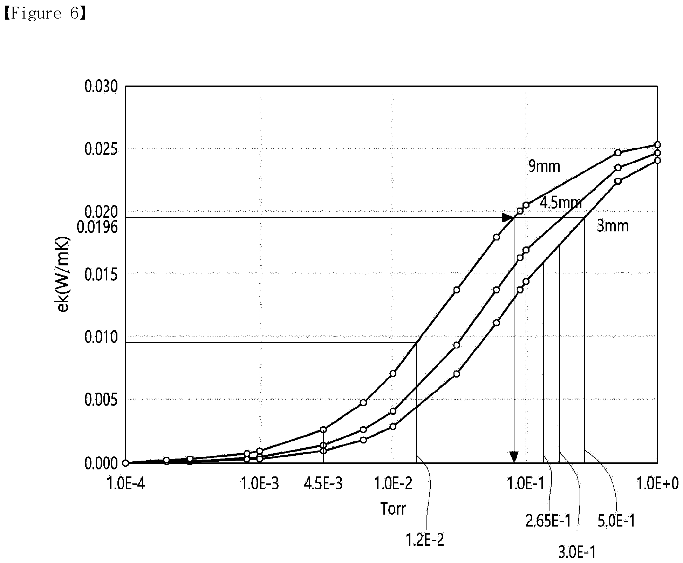

Fig. 6 is a graph illustrating results obtained by comparing the vacuum pressure with gas conductivity. Referring to Fig. 6, gas conductivity with respect to the vacuum pressure depending on a size of the gap in the vacuum space 50 was represented as a graph of effective heat transfer coefficient (eK). The effective heat transfer coefficient (eK) was measured when the gap in the vacuum space 50 has three values of about 3 mm, about 4.5 mm, and about 9 mm. The gap in the vacuum space 50 is defined as follows. When the radiation resistance sheet 32 exists inside surface vacuum space 50, the gap is a distance between the radiation resistance sheet 32 and the plate adjacent thereto. When the radiation resistance sheet 32 does not exist inside surface vacuum space 50, the gap is a distance between the first and second plates. It was seen that, since the size of the gap is small at a point corresponding to a typical effective heat transfer coefficient of about 0.0196 W/mK, which is provided to an adiabatic material formed by foaming polyurethane, the vacuum pressure is about 5.0E-1 Torr even when the size of the gap is about 3 mm.

Meanwhile, it was seen that the point at which reduction in adiabatic effect caused by the gas conduction heat is saturated even though the vacuum pressure decreases is a point at which the vacuum pressure is approximately 4.5E-3 Torr. The vacuum pressure of about 4.5E-3 Torr may be defined as the point at which the reduction in adiabatic effect caused by the gas conduction heat is saturated.

Also, when the effective heat transfer coefficient is about 0.01 W/mK, the vacuum pressure is about 1.2E-2 Torr. An example of a range of the vacuum pressure in the vacuum space according to the gap is presented. The support may include at least one of a bar, a connection plate, or a support plate. In this case, when the gap of the vacuum space is greater than or equal to about 3 mm, the vacuum pressure may be greater than or equal to A and less than about 5E-1 Torr, or be greater than about 2.65E-1 Torr and less than about 5E-1 Torr. As another example, the support may include at least one of a bar, a connection plate, or a support plate. In this case, when the gap of the vacuum space is greater than or equal to about 4.5 mm, the vacuum pressure may be greater than or equal to A and less than about 3E-1 Torr, or be greater than about 1.2E-2 Torr and less than about 5E-1 Torr.

As another example, the support may include at least one of a bar, a connection plate, or a support plate, and when the gap of the vacuum space is greater than or equal to about 9 mm, the vacuum pressure may be greater than or equal to A and less than about 1.0X10^-1 Torr or be greater than about 4.5E-3 Torr and less than about 5E-1 Torr.

Here, the A may be greater than or equal to about 1.0X10^-6 Torr and less than or equal to about 1.0E-5 Torr. The A may be greater than or equal to about 1.0X10^-5 Torr and less than or equal to about 1.0E-4 Torr. When the support includes a porous material or a filler, the vacuum pressure may be greater than or equal to about 4.7E-2 Torr and less than or equal to about 5E-1 Torr. In this case, it is understood that the size of the gap ranges from several micrometers to several hundreds of micrometers. When the support and the porous material are provided together in the vacuum space, a vacuum pressure may be created and used, which is middle between the vacuum pressure when only the support is used and the vacuum pressure when only the porous material is used.

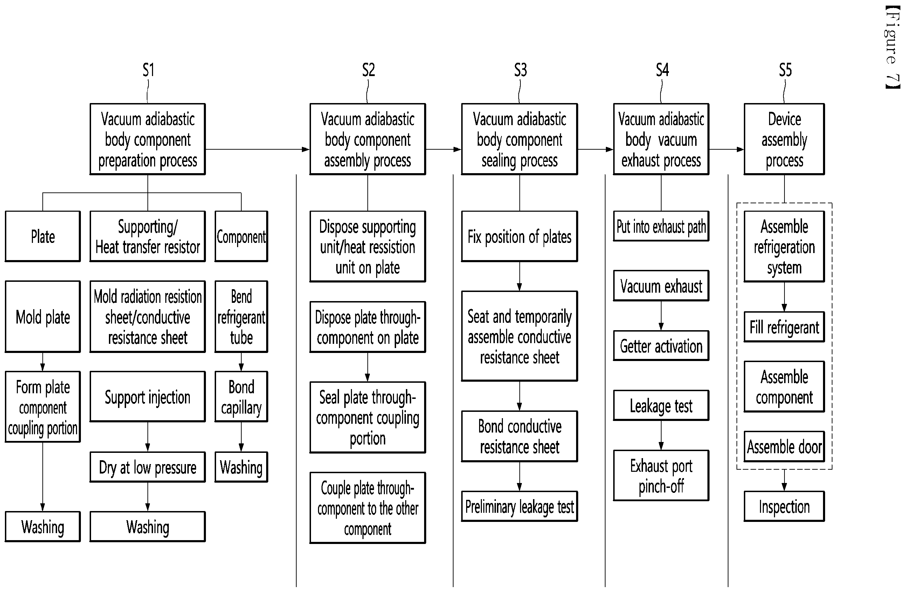

Fig. 7 is a view for explaining a process of manufacturing the vacuum adiabatic body.

Optionally, the vacuum adiabatic body may be manufactured by a vacuum adiabatic body component preparation process in which the first plate and the second plate are prepared in advance. Optionally, the vacuum adiabatic body may be manufactured by a vacuum adiabatic body component assembly process in which the first plate and the second plate are assembled. Optionally, the vacuum adiabatic body may be manufactured by a vacuum adiabatic body vacuum exhaust process in which a gas in the space defined between the first plate and the second plate is discharged. Optionally, after the vacuum adiabatic body component preparation process is performed, the vacuum adiabatic body component assembly process or the vacuum adiabatic body exhaust process may be performed.

Optionally, after the vacuum adiabatic body component assembly process is performed, the vacuum adiabatic body vacuum exhaust process may be performed. Optionally, the vacuum adiabatic body may be manufactured by the vacuum adiabatic body component sealing process (S3) in which the space between the first plate and the second plate is sealed. The vacuum adiabatic body component sealing process may be performed before the vacuum adiabatic body vacuum exhaust process (S4). The vacuum adiabatic body may be manufactured as an object with a specific purpose by an apparatus assembly process (S5) in which the vacuum adiabatic body is combined with the components constituting the apparatus. The apparatus assembly process may be performed after the vacuum adiabatic body vacuum exhaust process.

Here, the components constituting the apparatus means components constituting the apparatus together with the vacuum adiabatic body.

The vacuum adiabatic body component preparation process (S1) is a process in which components constituting the vacuum adiabatic body are prepared or manufactured. Examples of the components constituting the vacuum adiabatic body may include various components such as a plate, a support, a heat transfer resistor, and a tube. The vacuum adiabatic body component assembly process (S2) is a process in which the prepared components are assembled. The vacuum adiabatic body component assembly process may include a process of disposing at least a portion of the support and the heat transfer resistor on at least a portion of the plate.

For example, the vacuum adiabatic body component assembly process may include a process of disposing at least a portion of the support and the heat transfer resistor between the first plate and the second plate. Optionally, the vacuum adiabatic body component assembly process may include a process of disposing a penetration component on at least a portion of the plate. For example, the vacuum adiabatic body component assembly process may include a process of disposing the penetration component or a surface component between the first and second plates. After the penetration component may be disposed between the first plate and the second plate, the penetration component may be connected or sealed to the penetration component coupling portion.

An example of a vacuum adiabatic body vacuum exhaust process vacuum is as follows. The present disclosure may be any one of the, examples or a combination of two or more examples. The vacuum adiabatic body vacuum exhaust process may include at least one of a process of inputting the vacuum adiabatic body into an exhaust passage, a getter activation process, a process of checking vacuum leakage and a process of closing the exhaust port. The process of forming the coupling part may be performed in at least one of the vacuum adiabatic body component preparation process, the vacuum adiabatic body component assembly process, or the apparatus assembly process. Before the vacuum adiabatic body exhaust process is performed, a process of washing the components constituting the vacuum adiabatic body may be performed. Optionally, the washing process may include a process of applying ultrasonic waves to the components constituting the vacuum adiabatic body or a process of providing ethanol or a material containing ethanol to surfaces of the components constituting the vacuum adiabatic body. The ultrasonic wave may have an intensity between about 10 kHz and about 50 kHz. A content of ethanol in the material may be about 50% or more. For example, the content of ethanol in the material may range of about 50% to about 90%. As another example, the content of ethanol in the material may range of about 60% to about 80%.

As another example, the content of ethanol in the material may be range of about 65% to about 75%. Optionally, after the washing process is performed, a process of drying the components constituting the vacuum adiabatic body may be performed. Optionally, after the washing process is performed, a process of heating the components constituting the vacuum adiabatic body may be performed.

Hereinafter, a specific example of a vacuum adiabatic body is presented.

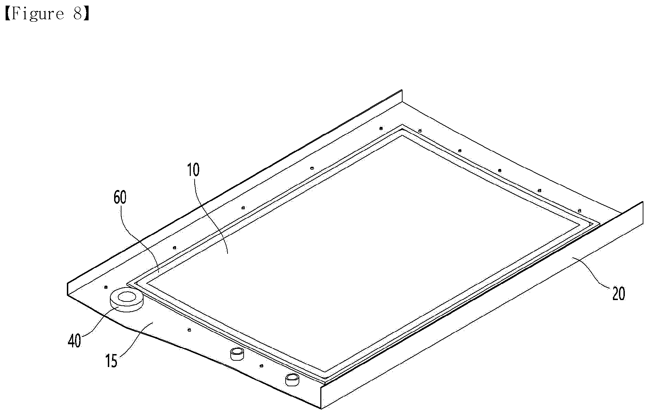

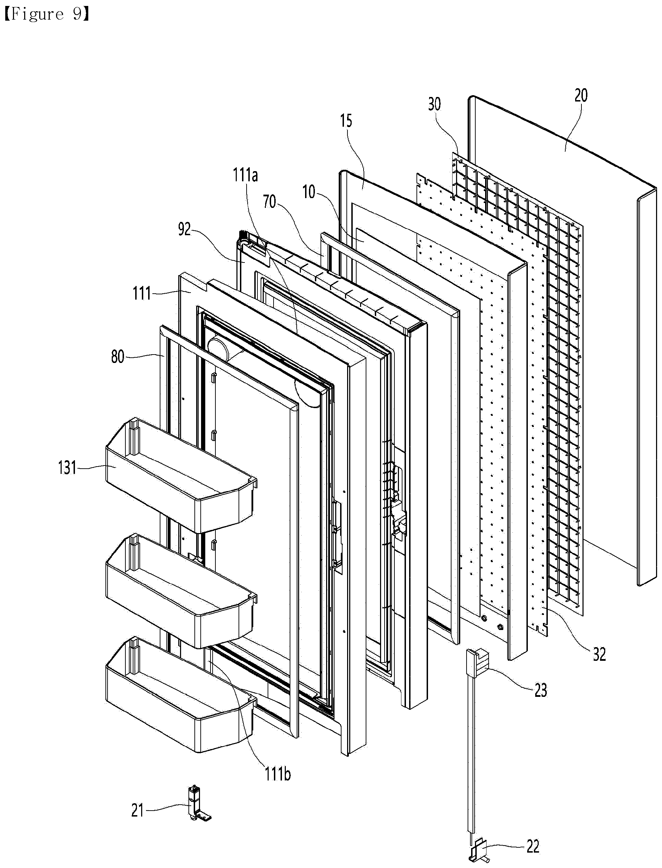

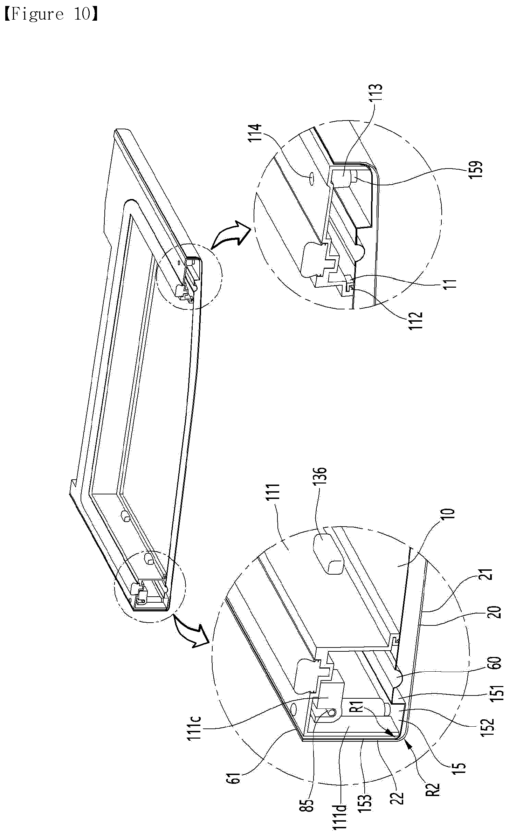

FIG. 8 is a perspective of a vacuum adiabatic body in a state in which an inner panel and accessories thereof are removed. FIG. 9 is an exploded perspective view of the vacuum adiabatic body. FIG. 10 is a horizontal cross-sectional view of the vacuum adiabatic body. This will be described with reference to FIGS. 8 to 10.

A vacuum space may be defined inside a first plate 10, a second plate 20, and a sealing part 61. The following may be optional. The side plate 15 nay be in contact with a vacuum space 50 around the vacuum space. The conductive resistance sheet 60 may be connected to at least one of the side plate or the first plate. The conductive resistance sheet 60 may be sealed to at least one of the side plate or the first plate. The conductive resistance sheet 60 may be in contact with the vacuum space. The inner panel 111 may be provided around the vacuum adiabatic body. The support 30, the radiant resistance sheet 32, a peripheral insulation material 92, a basket 131, a basket hanger 130, a latch 23, a handle 22, a hinge 21, and a gasket 80 may be provided as needed or selected.

The second plate may include a first extension part 21 extending in one direction and a second extension part 22 extending by being bent from the first extension part 21. The following contents may be applied optionally. The first extension part may provide a front surface of the vacuum adiabatic body. The second extension part 22 may provide a side surface of the vacuum adiabatic body. The second extension part may be provided on at least one side portion of the vacuum adiabatic body. The second extension part may provide opposing sides of the vacuum adiabatic body.

The side plate 15 may extend toward the side surface of the vacuum adiabatic body. The following may be optional. The side plate may have at least a portion that is bent upward and downward. The side plate may have at least three bent portions in its cross-section. The side plate may have a first extension part 151 that extends by being bent from the uppermost surface. A conductive resistance sheet may be attached to the uppermost surface. The side plate may have a second extension part 152. The first and second extension parts may be bent with respect to each other. The side plate may have a third extension part 153. The second extension part and the third extension part may be bent with respect to each other. The third extension part may extend along the side surface of the vacuum adiabatic body. The third extension part 153 of the side plate may have a portion extending parallel to the second extension part 22 of the second plate. The third extension part 153 of the side plate and the second extension part 22 of the second plate may be sealed to each other. The third extension part 153 of the side plate may be provided with a sealing part 61 at an end portion of the second extension part 22 of the second plate. The third extension part 153 of the side plate may provide a vacuum space between the second extension part 22 of the second plate. Both the extension parts except for the end portions of the third extension part 153 of the side plate and the second extension part 22 of the second plate may be insulated by a vacuum therebetween. The first extension part 21 of the second plate and the second extension part 22 of the second plate may be bent to a predetermined second curvature R2. The second extension part 152 of the side plate and the third extension part 153 of the side plate may be bent to a predetermined first curvature R1. The first curvature R1 may be less than the second curvature R2.

The inner panel 111 may be provided on an edge of the vacuum adiabatic body. The inner panel 111 may be provided outside the vacuum space. The following may be applied optionally. The inner panel may cover a rear edge of the vacuum space. The inner panel may cover a side edge of the vacuum space. The inner panel may cover the vacuum space. The inner panel may protect the vacuum space. The inner panel may be provided in shape of a closed curve. Components such as a gasket may be coupled to the inner panel 111. An additional member 111c may be further provided on the inner panel. A heater 85 may be mounted on the additional member. The heater may be placed between the inner panel and the additional member. The heater may prevent condensation. The inside of the inner panel 111 may be fixed to the first plate 10. The outside of the inner panel 111 may be fixed to the side plate 15. Here, the inside and outside are based on a center of the vacuum adiabatic body having a predetermined length. The inner panel may be fixed to the side plate or the first plate to provide the inner space. A peripheral insulation material may be placed in the internal space. The side plate may be provided with top and bottom surfaces opened. The top and bottom surfaces may be upper and lower walls extending in the thickness direction of the vacuum adiabatic body. If the side plate is made of stainless steel, processing of the upper and lower walls may be difficult. At least one of the upper wall or the lower wall may be provided with the peripheral insulation material. The inner panel 111 may be made of a resin. A body of the inner panel 111 may have at least one of an upper wall 111a or a lower wall 111b. The inner panel 111 may be provided by being injected together with at least one of the upper wall 111a or the lower wall 111b. Thus, at least one of a separate upper decorative plate or a separate lower decorative plate may not be required. The drawing illustrates a case in which there are both the walls. The inner panel may have a sidewall 111d extending along the second extension part 152 of the side plate. The sidewall 111d may provide an inner space in which the peripheral insulation material is accommodated. The sidewall may extend to a boundary of the first and second extension parts of the side plate. At least one of the upper wall, the lower wall, or the sidewall may extend in a direction intersecting the extension direction of the inner panel from an edge of the inner panel. This makes the injection more easily.

The peripheral insulation material 92 may be provided inside the inner panel. The following may be optional. The peripheral insulation material may be provided by at least one method, such as filling of a foam liquid, coupling of a porous material, coupling of a preformed product, and coupling of a foam member. The peripheral insulation material 92 may not be provided separately.

The inner panel 111 may be coupled to at least one of the first plate 10 or the side plate 15. The following may be optional. A first coupling part 159 may be provided on an outer surface of the side plate. The first coupling part may be provided as a boss. A second coupling part 113 may be provided on the inner surface of the inner panel. The second coupling part may be a boss guide aligned with the boss. Each of the boss and the boss guide may have a portion extending in a direction in which the inner panel and the side plate face each other. The first and second coupling parts may be coupled to each other. The first and second coupling parts may be provided in plurality along the edge of the vacuum adiabatic body. The first and second coupling parts may be coupled by a screw. The inner panel may be provided with a hole 114 into which the screw is inserted. The screw may be inserted from the rear to the front of the vacuum adiabatic body. A third coupling part 11 may be provided on an outer surface of the first plate. The third coupling part may be provided as a hook protrusion. A fourth coupling part 112 may be provided at an end of the inner panel. The fourth coupling part may be provided as a hook protrusion. The third and fourth coupling parts may be coupled to each other. The third and fourth coupling parts may be provided in plurality along the edge of the vacuum adiabatic body. The third and fourth coupling parts may be coupled by the hook protrusions that are hooked with each other. The inner panel may be coupled to the third and fourth coupling parts before the first and second coupling parts.

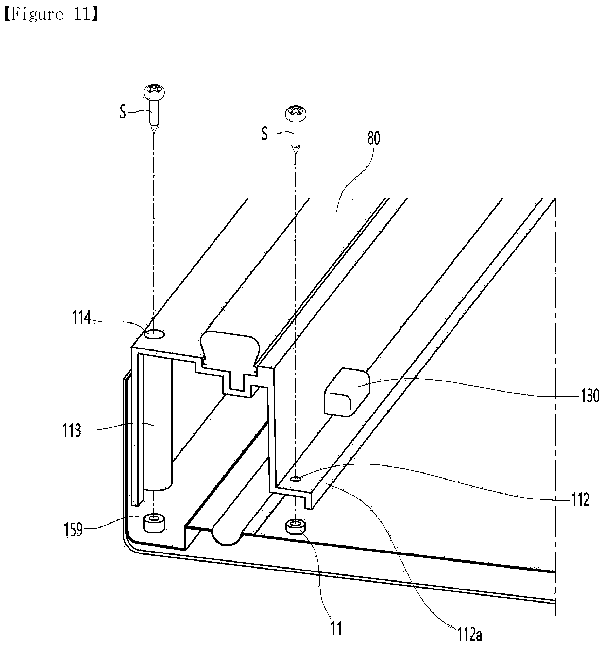

FIG. 11 is a view illustrating the coupling of the inner panel. Descriptions will be made with reference to FIG. 11.

The fourth coupling part 112 of the inner panel 111 and the third coupling part 11 of the first plate may not be the hook protrusion. The following contents may be optional. The fourth coupling part 112 of the inner panel 111 and the third coupling part 11 of the first plate may be provided as the boss guide and the boss. The boss and the boss guide may be coupled through a screw S. The boss and the boss guide may be provided on opposite sides. If all the coupling parts are provided with bosses, the coupling may be firmed more.

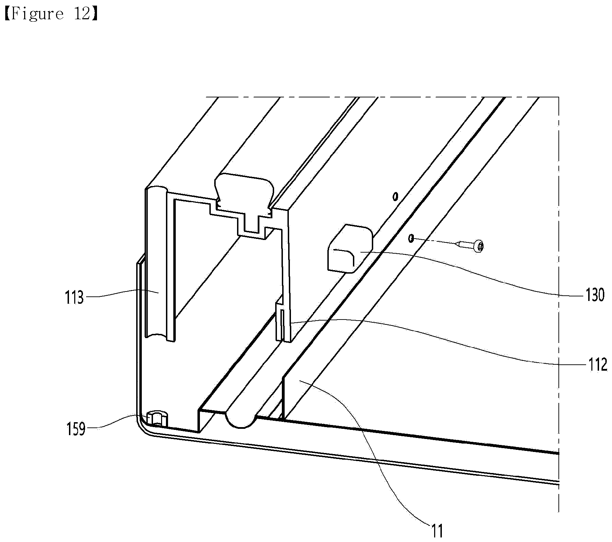

FIG. 12 is a view illustrating the coupling of the inner panel. Descriptions will be made with reference to FIG. 12.

The fourth coupling part 112 of the inner panel 111 and the third coupling part 11 of the first plate may not be a hook protrusion or a boss or boss guide. The following contents may be optional. The third coupling part 11 may be provided as a rib. Here, the rib may intersect the extension direction of the inner panel. The fourth coupling part 112 may be a groove into which the rib is guided or inserted. The rib may be inserted into the groove. The rib may not move due to the groove. The rib may be conveniently inserted in an insertion direction even if the groove is present. A worker may insert the rib into the groove. When the groove and the rib are fixed, a correct position of the inner panel may be fixed. Thereafter, the first and second coupling parts may be coupled. The worker may conveniently perform an assembly work. The third and fourth coupling parts may be provided to be fixed through screws later.

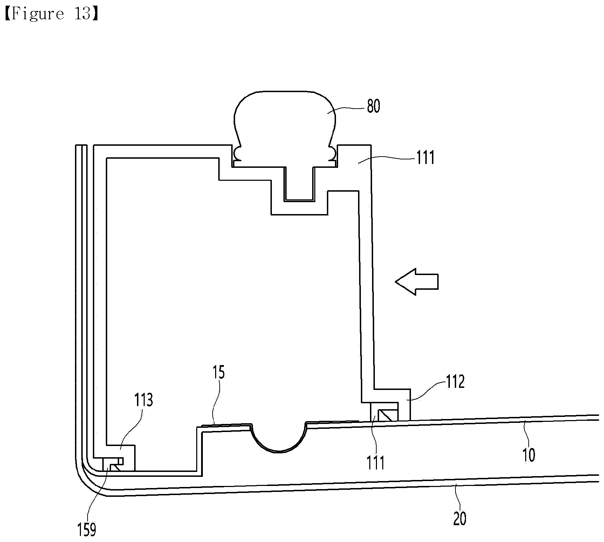

FIG. 13 is a view illustrating the coupling of the inner panel. Descriptions will be made with reference to FIG. 13.

The first coupling part 159 and the second coupling part 113 may not be a combination of the boss and the boss guide. The following may be optional. The first and second coupling parts may be provided as hook protrusions. Here, the third and fourth coupling parts may be provided as hook protrusions. The fourth coupling part 112 and the third coupling part 11 may be provided as hook protrusions. The fourth coupling part 112 and the second coupling part 113 may have hook protrusions that are bent in the same direction. The first coupling part 159 and the third coupling part 11 may have hook protrusions that are bent in the same direction. The inner panel may have a rectangular closed curve structure along the edge of the vacuum adiabatic body. The inner panel may be pressed downward toward the vacuum space. The fourth coupling part 112 and the second coupling part 113 of the inner panel above may be deformed during the coupling. After the hook operation is completed, it may be restored to its original state in the direction of an arrow. After the coupling operation is completed, the fourth coupling part 112 and the second coupling part 113 of the inner panel may not be separated. Thus, strong bonding force may be maintained. According to this embodiment, the coupling of the inner panel may be completed by the worker's snap operation. After the coupling, the strong bonding force may be obtained.

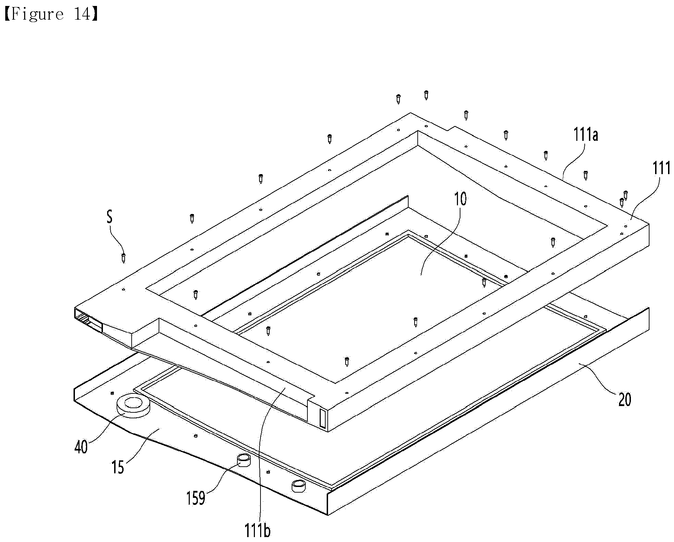

FIG. 14 is a perspective view illustrating the coupling of the inner panel. Descriptions will be made with reference to FIG. 14.

The following contents may be optional. The first coupling part 159 may be provided in plurality. The plurality of screw S may be provided to allow the inner panel to be firmly coupled. The internal space into which the peripheral insulation material 92 is inserted may be provided by the upper wall 111a and/or the lower wall 111b. Separate upper and lower covers may not be provided. This makes the work more convenient and reduce material costs.

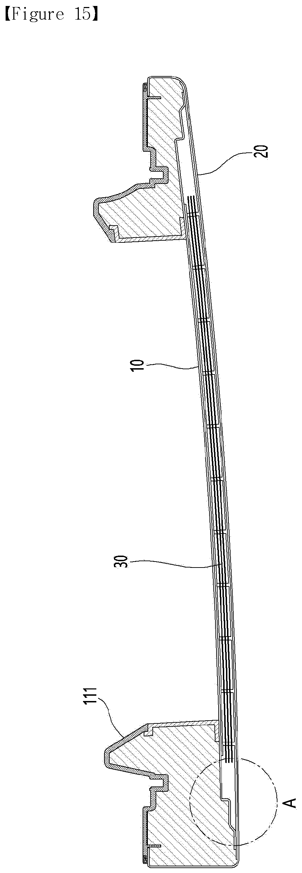

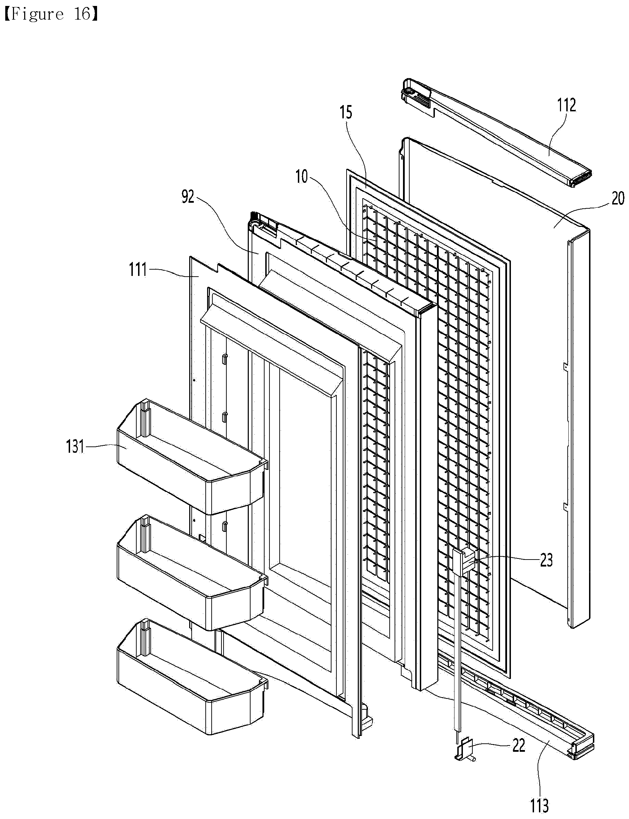

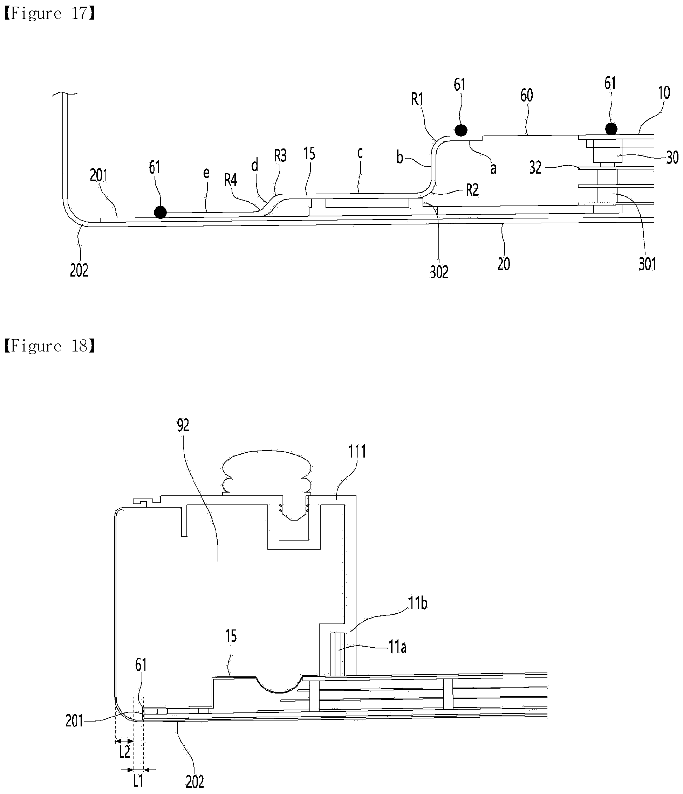

FIG. 15 is a cross-sectional view of an entire vacuum adiabatic body. FIG. 16 is an exploded perspective view of the vacuum adiabatic body. FIG. 17 is an exploded view of a portion A of FIG. 15. Descriptions will be made with reference to FIGS. 15 to 17.

A vacuum space may be defined inside a first plate 10, a second plate 20, and a sealing part 61. The following may be optional. The side plate 15 nay be in contact with a vacuum space 50 around the vacuum space. The conductive resistance sheet may be connected between the first plate and the second plate. The conductive resistance sheet 60 may be connected to at least one of the side plate or the first plate. The conductive resistance sheet 60 may be sealed to at least one of the side plate or the first plate. The conductive resistance sheet 60 may be provided as a substantially straight cross-section that is not bent. The straight line may be understood as including an engineering level of deformation. The conductive resistance sheet 60 may be in contact with the vacuum space. The inner panel 111 may be provided around the vacuum adiabatic body. The support 30, the radiant resistance sheet 32, the peripheral insulation material 92, a basket 131, a latch 23, a handle 22, a cover 112113, and other gaskets, a heating wire, etc. may be provided as needed or selected.

The side plate 15 may extend toward the side surface of the vacuum adiabatic body. The following may be optional. The side plate may have at least a portion that is bent upward and downward. The side plate may have at least three bent portions in its cross-section. The side plate may have a first extension part b that extends by being bent from the uppermost part a. The conductive resistance sheet may be attached to the uppermost part. The side plate may have a second extension part c. The first and second extension parts b and c may be bent with respect to each other. The side plate may have a third extension part d. The third extension part may be the shortest. The third extension part may be the shortest among the extension parts. The second and third extension parts c and d may be bent with respect to each other. The side plate may have a fourth extension part e. The third and fourth extension parts d and e may be bent with respect to each other. The fourth extension part may also be called the lowest extension part. A curvature part having a predetermined radius of curvature may be provided between the extension parts. A first curvature part R1 having a center of curvature at a right side may be included between the uppermost part a and the first extension part b. A second curvature part R2 having a center of curvature at a left side may be included between the first and second extension parts b and c. A third curvature part R3 having a center of curvature at the right side may be included between the second and third extension parts c and d. A fourth curvature part R4 having a center of curvature at the left side may be included between the third and fourth extension parts d and e. The side plate may have three walls extending along the extension direction of the vacuum adiabatic body. The side plate may have two walls extending in the thickness direction of the vacuum adiabatic body. The side plate may be provided by bending a single member. The plurality of bent parts of the side plate may increase in heat path to improve insulation efficiency. If a thickness of the side plate is thinner than the plate, an effect of reducing heat conductivity may further increase. The plurality of bent parts may increase in rigidity. The plurality of bent parts may increase in impact resistance and deformation resistance.

The following contents may be optional. A distance L1 between the uppermost part a and the second plate may be the largest. A distance L2 between the first extension part b and the second plate may be less than the distance L1. A thickness of the vacuum space may be reduced gradually or at once toward the periphery of the vacuum space. This relationship may be applied to at least one of the second, third, fourth extension parts, and the curvature part. For the curvature part, the thickness of the vacuum space may be gradually reduced. In the extension part, the thickness of the vacuum space may be constant. In the extension part, there may be an area in which the thickness of the vacuum space increases due to the deformation caused by high vacuum.

The side plate may improve deformation resistance and adiabatic performance. The following contents may be optional. A radius of curvature of the third curvature part R2 may be greater than or equal to that of the first curvature part R1. A radius of curvature of the second curvature part R2 may be less than that of the first curvature part R1. A radius of curvature of the fourth curvature part R4 may be greater than that of the third curvature part R3. The radius of curvature of the first curvature part R1 may be 5±1 millimeters.

The second plate 20 may have a first portion 201 and a second portion 202 depending on a distance from the vacuum space. The following contents may be optional. The second portion 202 of the second plate may have a portion that is in contact with the second space. The first portion 201 of the second plate may have a portion that is in contact with the vacuum space. The second portion may have a bent portion. The first portion 201 and the second portion 202 may be sealed to each other. The first portion 201 and the second portion 202 may be attached later. The first portion 201 may be sealed with the side plate 15. The fourth extension part e of the side plate may have a portion extending in the same direction as the first portion 201. The first portion 201 may extend further toward the edge of the vacuum adiabatic body than the fourth extension part e. An end of the fourth extension parts e and an inner surface of the first portion 201 may be sealed through a sealing part 61. A central portion of the vacuum adiabatic body at the end of the fourth extension part e may be insulated through the vacuum space. An end side surface of the side plate and the inner surface of the second plate may be welded. The welding that provides the sealing part may be performed using various methods such as laser welding and seam welding. The fourth extension part e of the side plate may have a portion extending in the same direction as the first portion 201.

The support 30 may be provided between the side plate and the second plate inside the vacuum space. The following contents may be optional. The uppermost part a of the side plate and the support may not be in contact with each other. The second extension part c of the side plate may extend in the same direction as the support. The support may be in contact with the second extension part c. The support may not be in contact with at least one of the curvature parts. The thermal conduction may be reduced through the support. The second extension part c of the side plate may have a portion that is not in contact with the support. The third and fourth extension parts d and e may have portions that are not in contact with the support. The fourth extension part e may provide an end sidewall of the vacuum space. Thus, the vacuum space may be expanded outside the support. As a result, this may have an effect of improving adiabatic performance. FIG. 18 is a partial cross-sectional view of the vacuum adiabatic body.

Descriptions will be made with reference to FIG. 18.

The differences from those of the embodiment of FIG. 17 will be described. The side plate 15 may not be provided with the fourth curvature part R4, the third extension part d, and the fourth extension part e of the side plate. The side plate may not substantially provide the curvature part. The side plate may be provided in a simple configuration. A side end of the first portion 201 of the second plate may be bent. An end of the first portion 201 of the second plate and an end of the side plate 15 may be sealed. The second portion 202 of the second plate may extend laterally by a predetermined straight line length L1 more than the first portion 201 of the second plate. The second portion 202 of the second plate may be bent by a predetermined interval length L2. The interval length L2 may be greater than the straight line length L1. Thus, the first portion 201 of the second plate may be stably seated on the second portion 202 of the second plate.

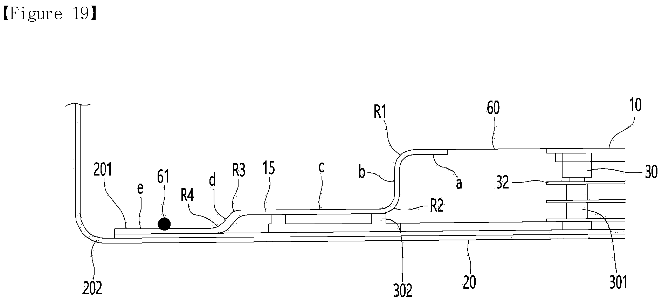

FIG. 19 is a partial cross-sectional view of the vacuum adiabatic body. Descriptions will be made with reference to FIG. 19.

The differences from those of the embodiment of FIG. 17 will be described. An end of the first portion 201 may be the same as an end of the fourth extension part e. Accordingly, rigidity of the second plate may increase. The sealing part 61 may be provided at a point spaced a predetermined distance from the end of each of the fourth extension part e and the first portion 201. Thus, a compression area may be secured when providing the sealing part. In other words, when providing the sealing part, both left and right sides may be pressed and fixed. Product yield may be improved when forming the sealing part. A length of an overlapping portion of the fourth extension part e and the first portion 201 may provide a section for inner and outer jigs and the welding. The length of the overlapping portion of the fourth extension part e and the first portion 201 may be 1 millimeter to 5 millimeters for the welding portion and 3 millimeters for either jig. Thus, the length of the overlapping portion of the fourth extension part e and the first portion 201 may be 7 millimeters to 11 millimeters. If the side plates are thick, the jig at one side may be sufficient. In this case, the length of the overlapping portion of the fourth extension part e and the first portion 201 may be 4 millimeters to 8 millimeters. The second curvature part R2 may be provided with a substantially smallest radius of curvature. The first and second extension parts may be used as separation points to couple the left and right members. The second curvature part may be provided at a right angle in an engineering sense. A coupling part 11a of the first plate and a coupling part 11b of the inner panel 111 may be provided so that the inner panel and the first plate are coupled to each other. The coupling part may be provided with a groove and a rib.

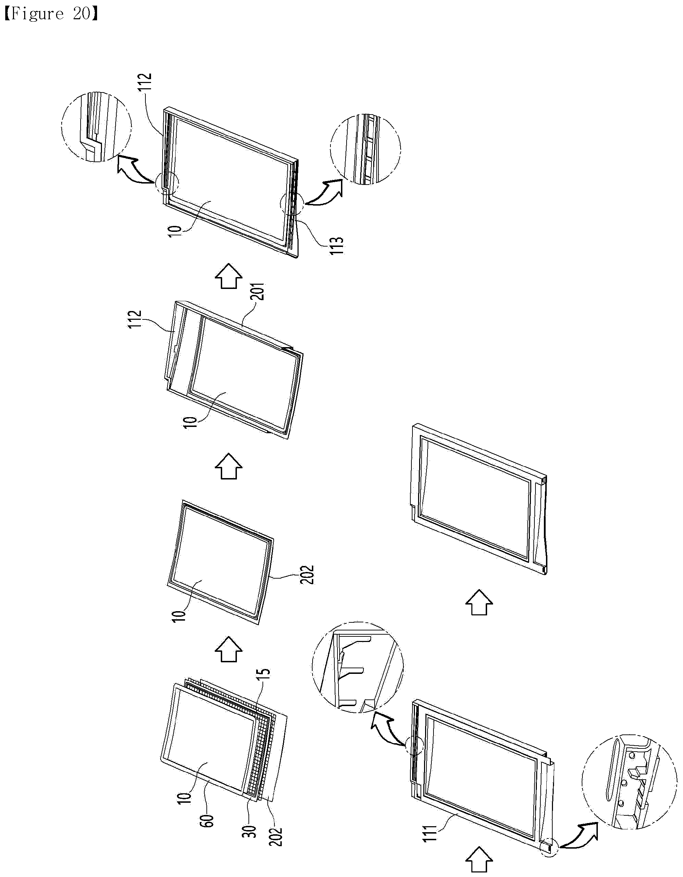

FIG. 20 is a view for explaining a process of manufacturing a vacuum adiabatic body. Descriptions will be made with reference to FIG. 20.

After a vacuum adiabatic body component assembly process is performed, a vacuum adiabatic body vacuum exhaust process may be performed. After the vacuum exhaust is completed, a device assembly process (S5) may be performed. The following contents may be optional. A first portion 201 of the second plate may already be coupled to a module of the vacuum adiabatic body. In this state, a second portion 202 of the second plate, an upper cover 112, and a lower cover 113 may be coupled in the device assembly process. In this state, only an inner surface corresponding to an inner panel may be opened. A sealing part 61 may be shielded from the outside by the second portion of the second plate. An unevenness that may occur during the manufacture of the sealing part may not be observed. Thereafter, the inner panel 111 may be coupled. Thereafter, a foaming process may be performed. A peripheral insulation material 92 may be provided through the foaming process. The foaming process may be performed for an internal space provided by at least a portion of the second plate, the upper cover, the lower cover, and the inner panel.

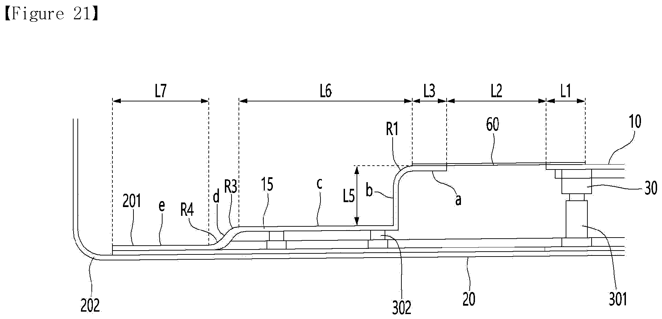

FIG. 21 is a reference view for explaining a design factor of members of the vacuum adiabatic body. Descriptions will be made with reference to FIG. 21.

The following contents may be optional. A length L1 of an overlapping portion of a conductive resistance sheet and a first plate may be provided as a length for at least one jig and welding part. The longer the length of the uppermost part a, the better the welding reliability. However, it is not desirable because it increases in heat loss. The length of the uppermost part a may be provided as 1 millimeter to 10 millimeters. A length L3 of the overlapping portion of the conductive resistance sheet and the side plate may be provided as a length for at least one jig and welding part. It is preferable that the welding part is provided on a flat surface. The length L3 of the overlapping portion of the conductive resistance sheet and the side plate may be provided as 5 millimeters or more. Thus, the welding reliability may be secured even if there is tolerance in the side plate. It is preferable that the welding part be provided at a center of the flat surface that is not bent. The length L3 of the overlapping portion of the conductive resistance sheet and the side plate may be equal to or less than the length L1 of the overlapping portion of the conductive resistance sheet and the first plate. This is because if the length L3 at which the conductive resistance sheet and the side plate overlap each other is secured, adiabatic performance may be deteriorated. A length L7 of an overlapping portion of the fourth extension part e and the first portion 201 may be provided as a length for at least one jig and welding part. The length L7 of the fourth extension may be greater than a length L5 of the second extension part. This may increase in strength of the side plate. A support may be provided along the length L1 at which the conductive resistance sheet and the first plate overlap each other. As a result, the reliability of the vacuum adiabatic body may be improved in respond to a vacuum pressure as much as possible.

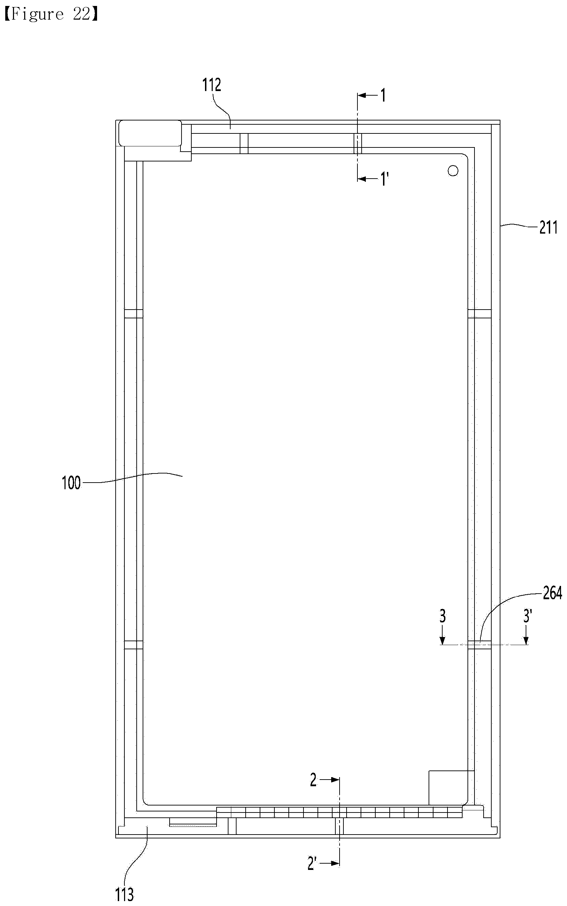

FIG. 22 is a rear view of the vacuum adiabatic body according to an embodiment.

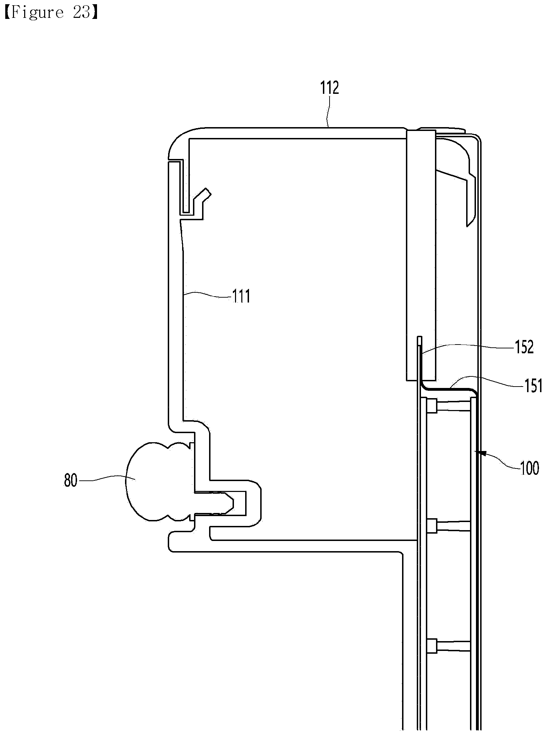

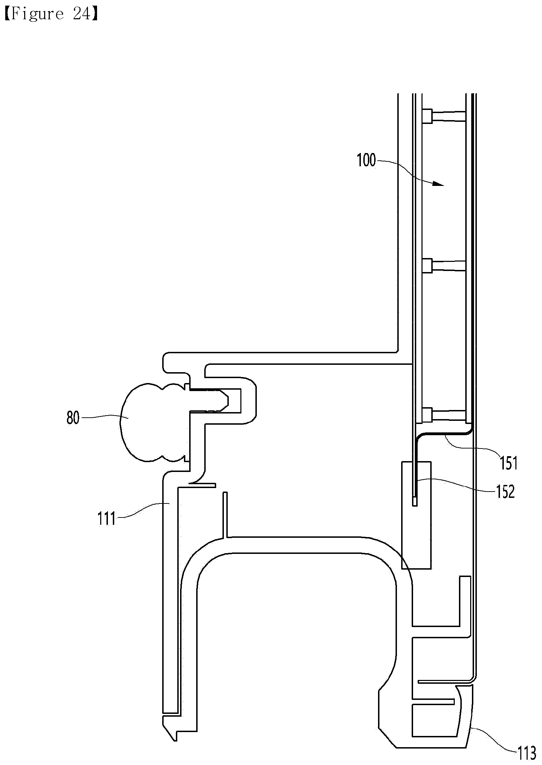

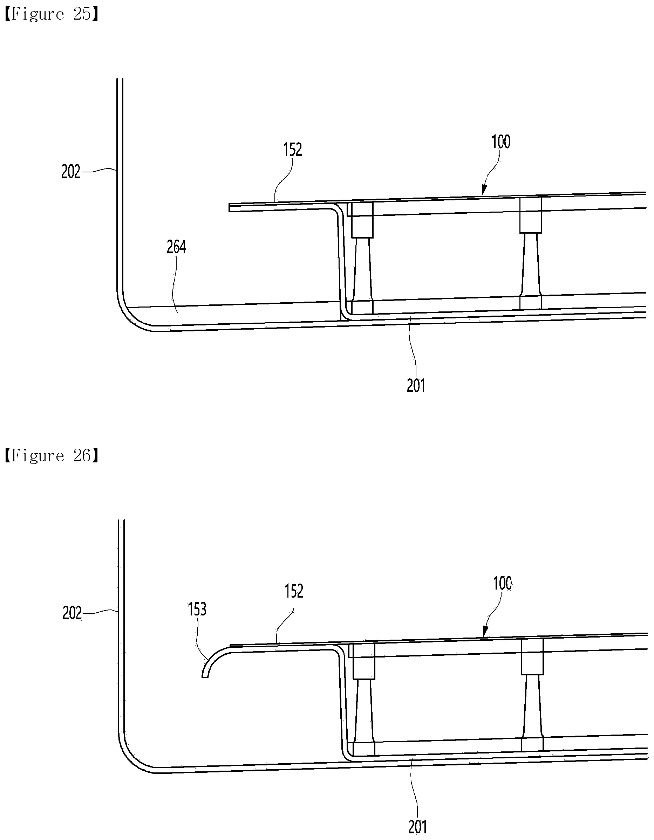

FIG. 23 is a cross-sectional view taken along line 1-1' of an upper portion of the vacuum adiabatic body. FIG. 24 is a cross-sectional view taken along line 2-2' of an upper portion of the vacuum adiabatic body. FIG. 25 is a cross-sectional view taken along line 3-3' of an upper portion of the vacuum adiabatic body. The descriptions will be made with reference to FIGS. 22 to 25.

An upper cover 112 may be provided on an upper portion of the outer panel 211. The upper cover 112 may define at least a portion of an internal space in which a foam member or peripheral insulation material is accommodated. The following contents may be optional. The upper cover 112 may be fixed to at least one of a second plate 20 or an inner panel 111. The lower cover 113 may be fixed to at least one of the second plate 20 or the inner panel 111. The vacuum adiabatic body module 100 may be seated on a second portion 202 of the second plate. The vacuum adiabatic body module 100 may be a partial component of the vacuum adiabatic body. The vacuum adiabatic body module 100 may be installed after completing coupling, welding, and exhaust between the plates. The vacuum adiabatic body module may be moved and handled as an independent component. The vacuum adiabatic body module may be prevented from moving in a thickness direction of a vacuum space by the second portion of the second plate of the inner panel. The movement in the extension direction of the vacuum space of the vacuum adiabatic body module may be performed by the upper cover 112, the lower cover 113, and a support block 264.

An end portion of the side plate 15 may be supported by or inserted into the upper cover 112. The following may be optional. At least a portion of the side plate may be coupled to the upper cover. The side plate may have a first portion 151 extending in a thickness direction of the vacuum space, and a second portion 152 extending in an extension direction of the vacuum space. The first and second portions may be connected to each other. The second portion may be supported on the upper cover. The upper cover may be provided with a separate structure. The structure may include any structure such as a slit, a wall, a protrusion, a groove, or a key. The structures may be provided in any number that is required for support. Too much may result in increasing an insulation loss. If it is too small or too little, the support operation may not be sufficient. The same may be said for the lower cover 113 as for the upper cover. Thus, the movement in the extension direction of the vacuum space of the vacuum adiabatic body module 100 may be stopped. The vertical movement in the extension directions of the vacuum space of the vacuum adiabatic body module 100 may be stopped. The vacuum adiabatic body may not move vertically even by adding components, for example filling of a foaming liquid.

The support block 264 may be coupled to the second portion 202 of the second plate. The following contents may be optional. The support block may be fixed with an adhesive. The support block may be provided on either left or right sides of the vacuum adiabatic body module or at one side. The support block may be provided as a three-dimensional structure. At least one side of the support block may be in direct or indirect contact with a sidewall of the vacuum adiabatic body module 100. The support block may be made of a material with low thermal conductivity. At least one of a size or number of the support blocks may be determined according to at least one of adiabatic performance or support performance. The support block may be supported at one side by at least one of the first portion 201 of the second plate or the first portion 51 of the side plate. The support block may stop the movement in the extension direction of the vacuum space. The support block may stop movement in a left and right direction in the extension direction of the vacuum space.

The movement of the vacuum adiabatic body module 100 may be stopped by at least one of the upper cover, the lower cover, or the support block. It may depend on their size and number.

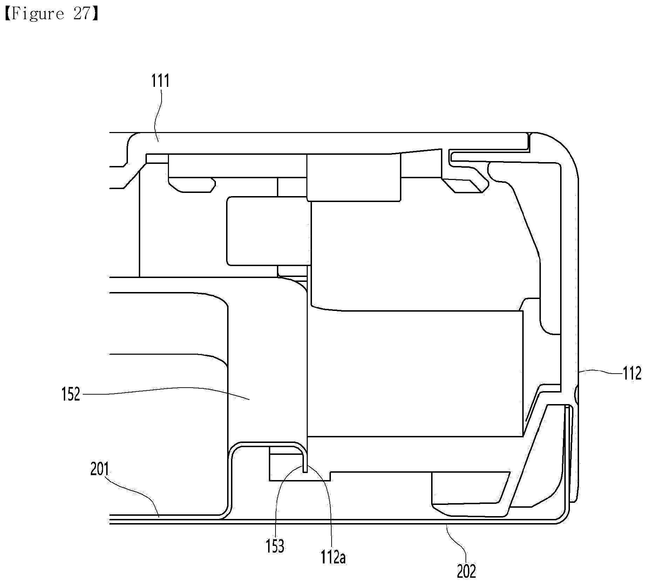

FIG. 26 is a partial cross-sectional view of the vacuum adiabatic body according to an embodiment. FIG. 27 is a cross-sectional view of an upper portion of the vacuum adiabatic body.

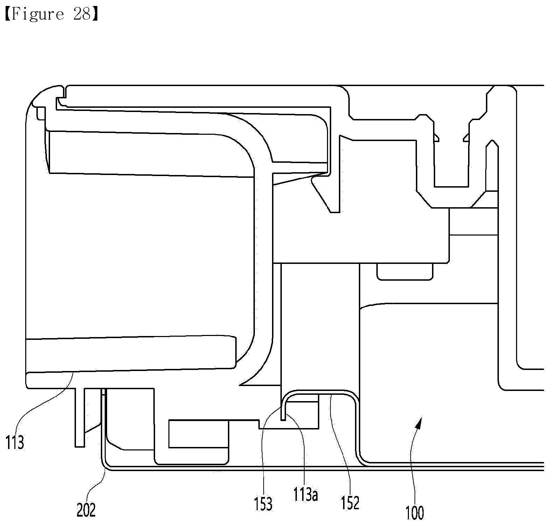

FIG. 28 is a cross-sectional view of a lower portion of the vacuum adiabatic body. This will be described with reference to FIGS. 26 to 28.

The side plate 15 may be provided with a third portion 153. The following contents may be optional. The third portion may extend from the second portion 152. The third portion may provide a bendable end. The third portion 153 may provide a portion of the vacuum adiabatic body module 100. The third portion may extend to intersect the extension direction of the vacuum adiabatic body. The third portion may extend to intersect the thickness direction of the vacuum adiabatic body. The third portion may be provided on both opposing sides of the vacuum adiabatic body module. The third portion may be provided on at least one of an upper side, a lower side, or a side surface of the vacuum adiabatic body module.

The following contents may be optional. The third portion may be integrated into at least one of the upper cover 112 or the lower cover 113 in a structure such as supporting, coupling, fixing, and inserting. The upper cover 112 and the lower cover 113 may be provided with coupling parts 112a and 113a. The coupling parts 112a and 113a may be provided with at least one structure of a resin structure, a rib, a groove, and a boss. At least one of the upper cover or the lower cover may not be provided. In this case, the third portion may be fixed to a separate panel. The separate panel may include an inner panel. The vacuum adiabatic body module 100 may not move while the components are coupled, by the third portion 153. The component may be a member that accommodates a foaming liquid.

### INDUSTRIAL APPLICABILITY

According to the present invention, the vacuum adiabatic body having high adiabatic performance may be conveniently assembled and provided at low costs.

## Claims

1. A vacuum adiabatic body comprising:
a first plate having a first temperature;
a second plate having a second temperature different form the first temperature;
a vacuum space provided between the first plate and the second plate;
a support provided in at least one of the inside of the vacuum space or a space adjacent to the first and second plates to maintain the vacuum space; and
a side plate disposed to connect the first plate to the second plate,
wherein the vacuum space comprises a first vacuum space having a first height and a second vacuum space having a height lower than the first height,
wherein the side plate comprises:
the uppermost part configured to define at least a portion of a wall that defines the first vacuum space;
a first extension part bent from the uppermost part to extend; and
a second extension part bent from the first extension part to extend, thereby defining at least a portion of a wall that defines the second vacuum space.

2. The vacuum adiabatic body according to claim 1, wherein the second extension part is provided to be spaced apart from a side surface of the vacuum adiabatic body or an edge defined in the vacuum adiabatic body in a longitudinal direction of the vacuum space.

3. The vacuum adiabatic body according to claim 1, further comprising an inner panel configured to protect the vacuum space against the outside of the vacuum space, wherein the inner panel is coupled to or supported by the side plate.

4. The vacuum adiabatic body according to claim 3, wherein the inner panel comprises:
a first portion coupled to or supported by the side plate; and
a second portion coupled to or supported by the first plate.

5. The vacuum adiabatic body according to claim 1, further comprising a third extension part bent from the second extension part to extend.

6. The vacuum adiabatic body according to claim 5, wherein the third extension part extends from the second extension part in a direction approaching a front surface of the vacuum adiabatic body.

7. The vacuum adiabatic body according to claim 6, wherein the third extension part is in contact with the second plate that defines the front surface of the vacuum adiabatic body.

8. The vacuum adiabatic body according to claim 5, further comprising a fourth extension part bent from the third extension part to extend.

9. The vacuum adiabatic body according to claim 8, wherein the fourth extension part is provided with a sealing part configured to seal the first plate and the second plate so that the vacuum space is provided.

10. The vacuum adiabatic body according to claim 8, further comprising:
a first curvature part provided between the uppermost part and the first extension part;
a second curvature part provided between the first and second extension parts;
a third curvature part provided between the second and third extension parts; and
a fourth curvature part provided between the third and fourth extension parts.

11. The vacuum adiabatic body according to claim 10, wherein a radius of curvature of the third curvature part is greater than or equal to a radius of curvature of the first curvature part, based on a center of curvature that is defined in the vacuum space.

12. The vacuum adiabatic body according to claim 10, wherein a radius of curvature of the fourth curvature part is greater than or equal to a radius of curvature of the second curvature part, based on a center of curvature that is defined in the vacuum space.

13. The vacuum adiabatic body according to claim 8, wherein the third extension part of the first, second, third, and fourth extension parts is provided as the shortest.

14. The vacuum adiabatic body according to claim 8, wherein the fourth extension part of the first, second, third, and fourth extension parts is provided longer than the first extension part or the second extension part.

15. The vacuum adiabatic body according to claim 5, wherein the third extension part extends away from the front surface of the vacuum adiabatic body from the second extension part.

16. The vacuum adiabatic body according to claim 15, wherein the third extension part is in contact with the second plate configured to define a side surface of the vacuum adiabatic body.

17. The vacuum adiabatic body according to claim 15, wherein the second plate comprises:
a first part configured to the front surface of the vacuum adiabatic body; and
a second part extending from the first part in a direction that is away from the front surface of the vacuum adiabatic body,
wherein the second part and the third extension part extend in a state of being in contact with each other.

18. The vacuum adiabatic body according to claim 1, further comprising a peripheral insulation material provided outside the vacuum space.

19. The vacuum adiabatic body according to claim 18, further comprising a cover configured to provide the peripheral insulation material,
wherein the side plate is coupled to or supported by the cover.

20. The vacuum adiabatic body according to claim 19, wherein an end or a bent end portion of the side plate is coupled to or supported by the cover.

21. The vacuum adiabatic body according to claim 19, further comprising a support block provided between a portion of the second plate and the side plate.
